# EUROPEAN PATENT SPECIFICATION

(11) **EP 4 137 852 B1**
(45) Date of publication and mention of the grant of the patent: **31.12.2025**
(21) Application number: 21789509.3
(22) Date of filing: 12.04.2021
(51) Int. Cl.: G02B 6/255

(54) **FUSION SPLICER, FUSION SPLICING SYSTEM, AND METHOD FOR FUSION SPLICING OPTICAL FIBER**
FUSIONSSPLEISSER, FUSIONSSPLEISSSYSTEM UND VERFAHREN ZUM FUSIONSSPLEISSEN VON GLASFASERN
DISPOSITIF D'ÉPISSURAGE PAR FUSION, SYSTÈME D'ÉPISSURAGE PAR FUSION ET PROCÉDÉ D'ÉPISSURAGE PAR FUSION DE FIBRE OPTIQUE

(30) Priority: 17.04.2020 WO PCT/JP2020/016859
(43) Date of publication of application: 22.02.2023
(73) Proprietor: Sumitomo Electric Optifrontier Co., Ltd., Yokohama-shi Kanagawa 244-8589 (JP)
(72) Inventor: SUZUKI, Takahiro, Yokohama-shi, Kanagawa 244-8589 (JP); OOKI, Kazuyoshi, Yokohama-shi, Kanagawa 244-8589 (JP); YUSA, Hideaki, Yokohama-shi, Kanagawa 244-8589 (JP)
(74) Representative: Boult Wade Tennant LLP
(86) International application number: PCT/JP2021/015225
(87) International publication number: WO 2021/210552

(56) References cited:
- EP-B1- 0 774 678
- WO-A1-2005/017585
- CN-A- 102 567 745
- CN-A- 104 515 672
- JP-A- 2002 109 050
- JP-A- 2013 054 192
- JP-A- 2015 172 736
- JP-A- 2016 097 228
- JP-A- 2016 152 011
- JP-A- 2018 100 502
- JP-A- 2019 118 940
- JP-A- 2020 020 997
- JP-A- 2020 020 998
- JP-B2- 4 102 707
- US-A1- 2004 047 572
- US-A1- 2020 056 960
- KABEYA, YOSHINORI: "Introduction to business application case of machine learning", DIGITAL PRACTICES, vol. 7, no. 4, 30 September 2016 (2016-09-30), JP , pages 370 - 377, XP009540296, ISSN: 2188-4390
- SHINDO, TOMONORI: "FURUNO ELECTRIC realizes autonomous driving for ships by reinforcement learning, Automatic acquisition of dynamics in Gaussian process and possible for real-world machine learning", NIKKEI ROBOTICS, vol. 51, 30 September 2019 (2019-09-30), pages 3 - 11, XP009540279, ISSN: 2189-5783

## Description

### Technical Field

The present disclosure relates to a fusion splicer, a fusion splicing system, and a method for fusion-splicing an optical fiber. This application is based upon and claims the benefit of priority from International Application No. PCT/JP2020/016859, filed on April 17, 2020.

### Background Art

Patent Literature 1 and Patent Literature 2 disclose a fusion splicer, a fusion splicing system, and a method for fusion-splicing an optical fiber.
US2020056960A1 discloses brightness profile data being extracted based on side view image data of an optical fiber, machine learning is performed by using teacher data indicating a correspondence relationship between brightness profile in a radial direction of the optical fiber and a type of the optical fiber, the teacher data being created based on the brightness profile data, a classification model is created to be able to determine the type of the optical fiber for an arbitrary optical fiber based on the brightness profile data indicating brightness profile in the radial direction of the arbitrary optical fiber, and the type of the optical fiber is determined for each of a pair of optical fibers by using the classification model based on the brightness profile data that is extracted based on side view image data of the pair of optical fibers as a target. The pair of optical fibers are fusion-spliced based on a fusion condition that is set in accordance with a combination of respective determined types of the optical fibers.

### Citation List

### Patent Literature

Patent Literature 1: Japanese Unexamined Patent Publication No. 2002-169050
Patent Literature 1: Japanese Unexamined Patent Publication No. 2020-20997

### Summary of Invention

There is provided a fusion splicer according to claim 1. There is also provided a method for fusion-splicing an optical fiber according to claim 13. Preferred or advantageous features are set out in the dependent claims.

A fusion splicing system according to the disclosure includes a plurality of fusion splicers, each of which is the fusion splicer, and a model creation device. The model creation device creates a discrimination model by collecting sample data from the plurality of fusion splicers to perform machine learning, and provides the discrimination model to the plurality of fusion splicers.

### Brief Description of Drawings

FIG. 1 is a diagram schematically illustrating a configuration of an optical fiber fusion splicing system according to an embodiment of the disclosure.
FIG. 2 is a perspective view illustrating an appearance of a fusion splicer, and illustrates an appearance in a state where a windshield cover is closed.
FIG. 3 is a perspective view illustrating an appearance of the fusion splicer, and illustrates an appearance in a state where the windshield cover is open and an internal structure of the fusion splicer can be seen.
FIG. 4 is a block diagram illustrating a functional configuration of the fusion splicer.
FIG. 5 is a block diagram illustrating a hardware configuration of the fusion splicer.
FIG. 6 is a diagram illustrating an operation of a splicing unit.
FIG. 7 is a diagram illustrating an operation of the splicing unit.
FIG. 8 is a diagram illustrating an operation of the splicing unit.
FIG. 9 is a diagram of an end face of one optical fiber as viewed from a front.
FIG. 10 is a diagram schematically illustrating imaging data obtained in an imaging unit.
FIG. 11 is a block diagram illustrating a functional configuration of a model creation device.
FIG. 12 is a block diagram illustrating a hardware configuration of the model creation device.
FIG. 13 is a flowchart illustrating a method according to an embodiment.
FIG. 14 is a flowchart showing a method according to a modified example not being part of the claimed invention.

### Description of Embodiments

### [Problems to be solved by disclosure]

There are various types of optical fibers. For example, the types of optical fibers are distinguished by features related to applications and optical characteristics and structural features. As the features related to applications and optical characteristics, there are features such as single mode fiber (SMF), multi mode fiber (MMF), general-purpose single mode fiber, dispersion shifted single mode fiber (DSF), and non-zero dispersion shifted single mode fiber (NZDSF: Non-Zero DSF). As the structural features, there are features such as optical fiber diameter, core diameter, core and cladding material, and radial refractive index distribution. Further, optimum fusion conditions when a pair of optical fibers is fusion-spliced, for example, discharge time, relative position between optical fibers, vary depending on the combination of types of pair of optical fibers. However, the type of optical fiber already laid is unknown in many cases. Therefore, it is important for a fusion splicer to accurately discriminate the combination of the types of pair of optical fibers to be spliced.

For example, in a system described in Patent Literature 2, a discrimination model capable of discriminating the type of optical fiber from luminance distribution data in a radial direction of the optical fiber is created using machine learning. However, even when only the discrimination model by machine learning is used, discrimination accuracy is limited.

### [Effect of disclosure]

According to the disclosure, it is possible to provide a fusion splicer, a fusion splicing system, and a method for fusion-splicing an optical fiber, which can improve optical fiber type discrimination accuracy.

### [Description of embodiments of disclosure]

First, embodiments of the disclosure will be listed and described. A fusion splicer according to the invention is defined in claim

A fusion splicing system according to an embodiment includes a plurality of fusion splicers, each of which is the fusion splicer, and a model creation device. The model creation device collects sample data from the plurality of fusion splicers, performs machine learning to create a discrimination model, and provides the discrimination model to the plurality of fusion splicers.

A method for fusion-splicing an optical fiber according to the invention is defined in claim 13.

In the fusion splicer, the fusion splicing system, and the fusion-splicing method, the types of optical fibers are discriminated using the first and second discrimination algorithms. Of these discrimination algorithms, the first discrimination algorithm is predetermined by a method, other than machine learning, based on a correlation between a plurality of feature amounts obtained from the imaging data of the optical fibers and the types of optical fibers, and the same discrimination accuracy as before can be expected. The second discrimination algorithm includes a discrimination model created by machine learning using sample data indicating a correspondence relationship between the plurality of feature amounts and the types of optical fibers. Therefore, high-precision discrimination based on machine learning can be expected for the types of optical fibers that cannot be discriminated or tend to be erroneously discriminated by the first discrimination algorithm. Therefore, according to the fusion splicer, the fusion splicing system, and the fusion-splicing method, by adopting a discrimination result by any of the first and second discrimination algorithms, the optical fiber type discrimination accuracy may be improved when compared to a conventional case.

In the fusion splicer, the fusion splicing system, and the fusion-splicing method, machine learning may be deep learning. In this case, the optical fiber type discrimination accuracy may be further improved.

In the fusion splicer, the fusion splicing system, and the fusion-splicing method, the discrimination unit (the discriminating) adopts a discrimination result by one of the first and second discrimination algorithms when a predetermined feature amount included in the plurality of feature amounts is larger than a threshold value, and adopts a discrimination result by the other one of the first and second discrimination algorithms when the predetermined feature amount is smaller than the threshold value. For example, by such a method, it is possible to easily select a discrimination result of one of the first and second discrimination algorithms to be adopted. In this case, the threshold value may be a value determined based on a comparison between the discrimination accuracy by the first discrimination algorithm and the discrimination accuracy by the second discrimination algorithm when the predetermined feature amount changes. In this way, the optical fiber type discrimination accuracy may be further improved.

In the fusion splicer, the fusion splicing system, and the fusion-splicing method, the discrimination unit (the discriminating) adopts the discrimination result thereof when the type of each of the optical fibers can be discriminated by the first discrimination algorithm, and adopts the discrimination result by the second discrimination algorithm when the type of each of the optical fibers cannot be discriminated by the first discrimination algorithm. For example, by such a method, it is possible to improve the optical fiber type discrimination accuracy. Further, in this case, the discrimination unit (the discriminating) may first execute the first discrimination algorithm, and then execute the second discrimination algorithm when the type of each of the optical fibers cannot be discriminated by the first discrimination algorithm. As a result, the amount of calculation (the discriminating) of the discrimination unit may be reduced. Alternatively, the discrimination unit (the discriminating) may execute the first discrimination algorithm and the second discrimination algorithm in parallel. As a result, it is possible to shorten a time required to obtain a final discrimination result.

In the fusion splicer, the fusion splicing system, and the fusion-splicing method, the imaging unit (the generating imaging data) images the pair of optical fibers at least two times to generate imaging data for at least two times. Then, when the variation of a predetermined feature amount between at least two feature amount groups consisting of the plurality of feature amounts obtained from at least two imaging data is larger than a threshold value, the discrimination unit (the discriminating) adopts a discrimination result obtained by one of the first and second discrimination algorithms, and when the variation of the predetermined feature amount is smaller than the threshold value, the discrimination unit (the discriminating) adopts a discrimination result obtained by any one of the first and second discrimination algorithms. As a result, it is possible to further improve the discrimination accuracy of the type of optical fibers.

In the fusion splicer, the fusion splicing system, and the fusion-splicing method, the imaging unit (the generating imaging data) images the pair of optical fibers at least two times to generate imaging data for at least two times. Then, the discrimination unit (the discriminating) executes the first and second discrimination algorithms based on at least two feature amount groups consisting of the plurality of feature amounts obtained from at least two imaging data. Among at least two discrimination results obtained by the first discrimination algorithm and at least two discrimination results obtained by the second discrimination algorithm, the discrimination unit (the discriminating) adopts the at least two discrimination results with smaller variation of discrimination results. As a result, it is possible to further improve the discrimination accuracy of the type of optical fibers.

In the fusion splicer, the fusion splicing system, and the fusion-splicing method, imaging positions of at least two times of imaging data in an optical axis direction of the pair of optical fibers may be identical to each other or different from each other.

In the fusion splicing system, the model creation device may classify the plurality of fusion splicers into two or more groups presumed to have similar tendencies of imaging data to create the discrimination model for each group. The second discrimination algorithm of the discrimination unit of each of the fusion splicers may obtain the discrimination model corresponding to the group to which each of the fusion splicers belongs from the model creation device. As a result, the machine learning can be performed only within a group in which the tendencies of the imaging data are similar, for example, within a group in which the mechanical and structural variations of the fusion splicers are small, or within a group in which the mechanical and structural variations of the imaging units are small. Therefore, it is possible to further improve the optical fiber type discrimination accuracy by the second discrimination algorithm.

In the fusion splicing system, the sample data used for the machine learning of the model creation device may include both the sample data when a type of each of the pair of optical fibers is allowed to be discriminated by the first discrimination algorithm, and the sample data when a type of each of the pair of optical fibers is not allowed to be discriminated and when the type of each of the pair of optical fibers is erroneously discriminated by the first discrimination algorithm. In this case, it is possible to include the types of optical fibers, which are weak points of the first discrimination algorithm, in machine learning of the model creation device, and to improve overall optical fiber type discrimination accuracy.

In the fusion splicing system, the sample data used for machine learning of the model creation device may include only the sample data when the type of each of the optical fibers can be discriminated by the first discrimination algorithm, and the discrimination unit of each fusion splicer may perform machine learning using sample data thereof when the type of each of the optical fibers cannot be discriminated and when the type of each of the optical fibers is erroneously discriminated by the first discrimination algorithm to improve the discrimination model. In this case, discrimination accuracy of the second discrimination algorithm may be improved for each fusion splicer for the types of optical fibers that cannot be discriminated by the first discrimination algorithm due to mechanical and structural variations of each fusion splicer, for example, mechanical and structural variations of the imaging unit.

In the fusion splicing system, the sample data used for machine learning of the model creation device may include sample data when the type of each of the optical fibers can be discriminated by the first discrimination algorithm, and sample data when the type of each of the optical fibers cannot be discriminated and when the type of each of the optical fibers is erroneously discriminated by the first discrimination algorithm. The discrimination unit of each fusion splicer may perform machine learning using sample data thereof when the type of each of the optical fibers cannot be discriminated and when the type of each of the optical fibers is erroneously discriminated by the first discrimination algorithm to improve the discrimination model. However, sample data provided to the model creation device is excluded. In this case, it is possible to include the types of optical fibers, which are weak points of the first discrimination algorithm, in machine learning of the model creation device, and to improve the discrimination accuracy of the second discrimination algorithm for each fusion splicer for the types of optical fiber that cannot be discriminated by the first discrimination algorithm due to mechanical and structural variations of each fusion splicer, for example, mechanical and structural variations of the imaging unit. Therefore, it is possible to further improve the overall optical fiber type discrimination accuracy.

### [Details of embodiments of disclosure]

Specific examples of the fusion splicer, the fusion splicing system, and the method for fusion-splicing the optical fiber of the disclosure will be described below with reference to the drawings. It should be noted that the invention is not limited to these examples, is indicated by the scope of claims, and is intended to include all modifications within the scope of claims. In the following description, the same elements will be designated by the same reference symbols in the description of the drawings, and duplicate description will be omitted.

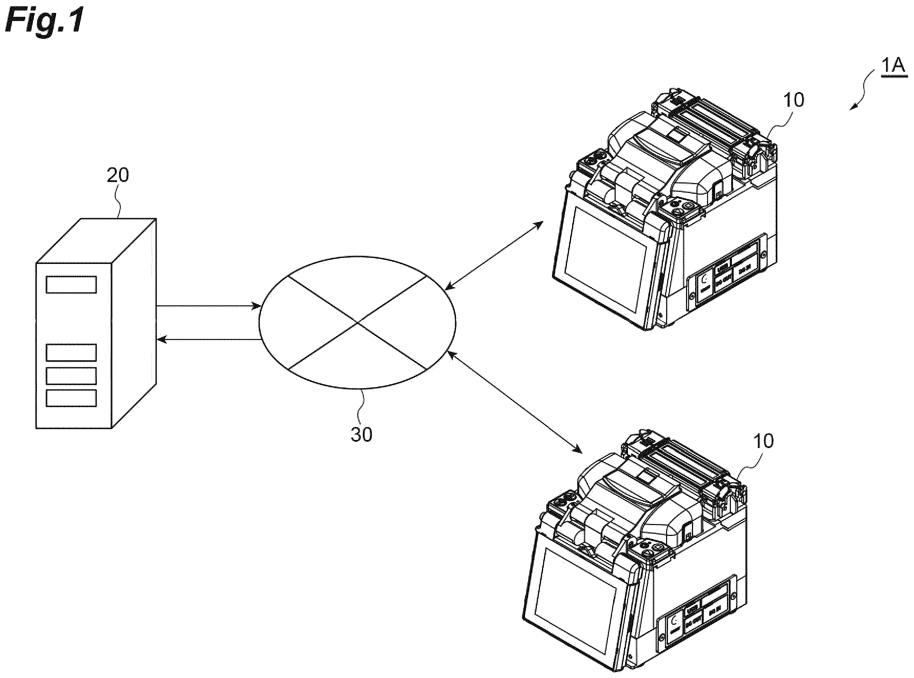

FIG. 1 is a diagram schematically illustrating a configuration of a fusion splicing system 1A according to an embodiment of the disclosure. The fusion splicing system 1A includes a plurality of fusion splicers 10 and a model creation device 20. Each of the fusion splicers 10 is a device for performing fusion splicing of optical fibers. The model creation device 20 is a device for creating a discrimination model for discriminating a type of optical fiber. The model creation device 20 is a computer capable of communicating with the plurality of fusion splicers 10 via an information communication network 30. The information communication network 30 is, for example, the Internet. A location area of the model creation device 20 is separated from a location area of the fusion splicer 10.

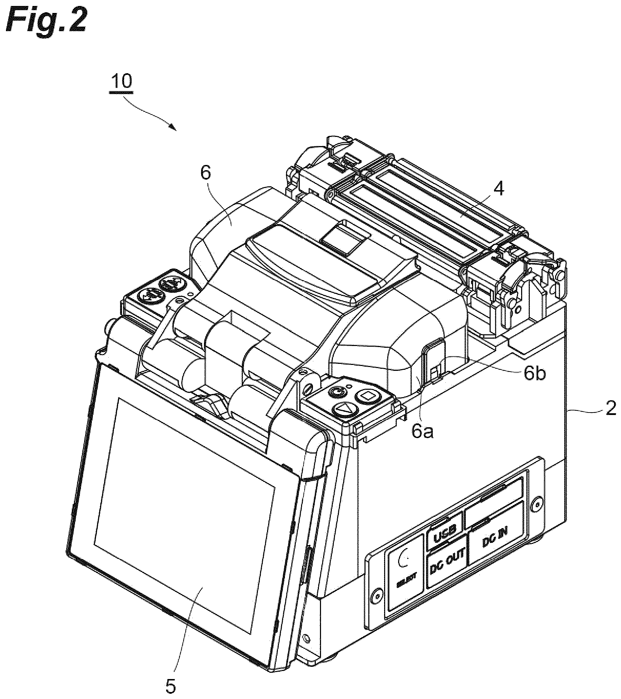

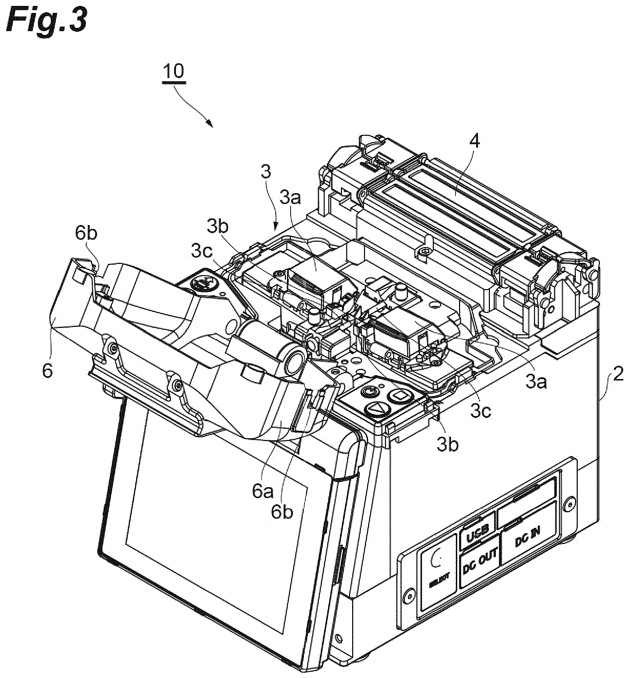

FIGS. 2 and 3 are perspective views illustrating appearances of the fusion splicer 10. FIG. 2 illustrates an appearance in a state where a windshield cover is closed, and FIG. 3 illustrates an appearance in a state where the windshield cover is open and an internal structure of the fusion splicer 10 can be seen. As illustrated in FIGS. 2 and 3, the fusion splicer 10 includes a box-shaped housing 2. A splicing unit 3 for fusion-splicing the optical fibers and a heater 4 are provided on an upper portion of the housing 2. The heater 4 is a unit that heats and contracts a fiber reinforcing sleeve put on a splicing part between the optical fibers fusion-spliced in the splicing unit 3. The fusion splicer 10 includes a monitor 5 that displays a fusion splicing status between optical fibers imaged by an imaging unit (described later) disposed inside the housing 2. Further, the fusion splicer 10 includes a windshield cover 6 for preventing wind from entering the splicing unit 3.

The splicing unit 3 has a holder mounting portion on which a pair of optical fiber holders 3a can be mounted, a pair of fiber positioning portions 3b, and a pair of discharge electrodes 3c. Each of the optical fibers to be fused is held and fixed by the optical fiber holders 3a, and each of the optical fiber holders 3a is placed on and fixed to the holder mounting portion. The fiber positioning portions 3b are disposed between the pair of optical fiber holders 3a to position a tip of the optical fiber held in each of the optical fiber holders 3a. The discharge electrodes 3c are electrodes for fusing tips of optical fibers to each other by arc discharge, and are disposed between the pair of fiber positioning portions 3b.

The windshield cover 6 is coupled to the housing 2 to cover the splicing unit 3 so as to be openable and closable. An introduction port 6b for introducing an optical fiber into the splicing unit 3, that is, to each of the optical fiber holders 3a, is formed on each of side faces 6a of the windshield cover 6.

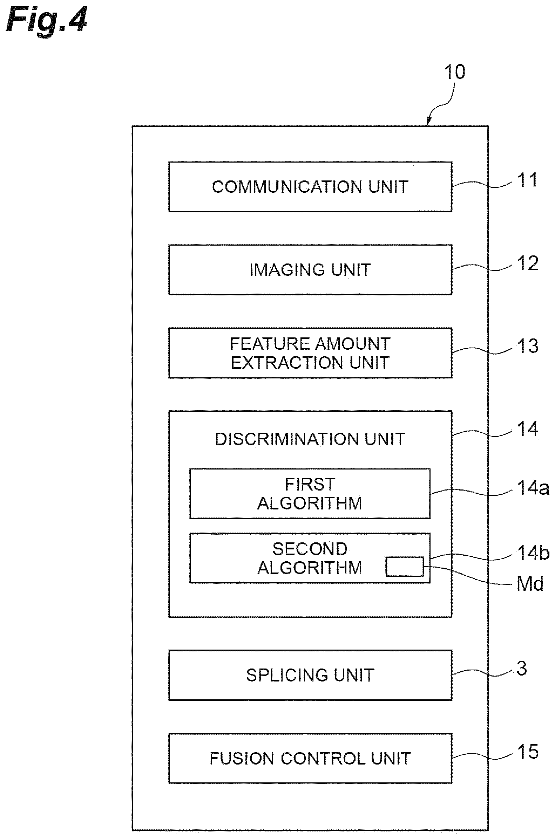

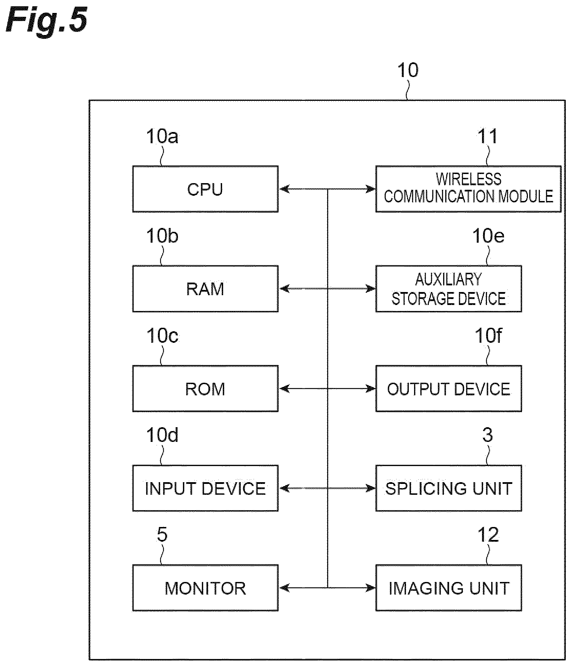

FIG. 4 is a block diagram illustrating a functional configuration of the fusion splicer 10. FIG. 5 is a block diagram illustrating a hardware configuration of the fusion splicer 10. As illustrated in FIG. 4, functionally, the fusion splicer 10 includes the splicing unit 3, a communication unit 11, an imaging unit 12, a feature amount extraction unit 13, a discrimination unit 14, and a fusion control unit 15. The imaging unit 12 includes an imaging element and an observation optical unit that outputs an enlarged image of an imaging target to the imaging element. The observation optical unit includes, for example, one or more lenses. As illustrated in FIG. 5, the fusion splicer 10 includes a computer, as a control unit, having hardware such as a CPU 10a, a RAM 10b, a ROM 10c, an input device 10d, an auxiliary storage device 10e, and an output device 10f. By operating these elements by a program, etc., each function of the fusion splicer 10 is realized. These elements in the control unit are electrically connected to the splicing unit 3, the monitor 5, a wireless communication module as the communication unit 11, and the imaging unit 12. The input device 10d may include a touch panel integrally provided with the monitor 5.

The communication unit 11 is constituted by, for example, a wireless LAN module. The communication unit 11 transmits and receives various data to and from the model creation device 20 via the information communication network 30 such as the Internet. The imaging unit 12 images a pair of optical fibers to be spliced from a radial direction of the optical fibers through the observation optical unit (lens) with the pair of optical fibers facing each other, and generates imaging data. The feature amount extraction unit 13 extracts a plurality of feature amounts for specifying a type of optical fiber from the imaging data obtained from the imaging unit 12. The feature amounts include brightness information in the radial direction of the optical fibers. The brightness information in the radial direction of the optical fibers includes, for example, at least one of the following items: a luminance distribution in the radial direction of the optical fiber; an outer diameter of the optical fiber; an outer diameter of a core; a ratio of the outer diameter of the core to the outer diameter of the optical fiber; a ratio of the area of the core to the area of the cladding of the optical fiber; the total luminance of the optical fiber; positions and the number of variation points of the luminance distribution in a cross section of the optical fiber; a luminance difference between a core portion and a clad portion of the optical fiber; and a width of the core portion having specific luminance or more. In addition, the imaging data used for extracting the feature amounts may include imaging data obtained while discharging the pair of optical fibers to be connected in a state in which the optical fibers face each other. In this case, the feature amounts includes, for example, at least one selected from a light intensity at a specific position and a temporal light intensity variation at the specific position.

The discrimination unit 14 discriminates the type of each of the pair of optical fibers to be spliced based on the plurality of feature amounts provided by the feature amount extraction unit 13. Therefore, the discrimination unit 14 stores and holds a first discrimination algorithm 14a and a second discrimination algorithm 14b for discriminating the type of optical fiber. The first discrimination algorithm 14a is predetermined by a method, other than machine learning, based on a correlation between the plurality of feature amounts and the type of optical fiber. The first discrimination algorithm 14a determines a threshold value of a typical feature amount according to a type of optical fiber empirically or by a test, and discriminates the type of optical fiber based on a magnitude relationship between the feature amount and the threshold value. As an example, in order to discriminate between a single mode fiber and a multimode fiber, the core outer diameter is used as the feature amount. In that case, it is determined to be the single mode fiber when the core outer diameter as a feature amount is smaller than a predetermined threshold value, and it is determined to be the multimode fiber when the core outer diameter is larger than the predetermined threshold value.

The second discrimination algorithm 14b includes a discrimination model Md for discriminating a type of optical fiber to be spliced based on imaging data of the optical fiber to be spliced. The discrimination model Md is created by machine learning by the model creation device 20 using sample data indicating a correspondence relationship between a plurality of feature amounts and the types of optical fibers. The discrimination model Md discriminates the type of each of the pair of optical fibers by inputting the feature amount obtained from the feature amount extraction unit 13. These discrimination algorithms 14a and 14b are stored in, for example, the ROM 10c or the auxiliary storage device 10e. The discrimination unit 14 selects and adopts a discrimination result by any of the discrimination algorithms 14a and 14b using any of the following systems A, B, C and D.

### (System A)

The discrimination unit 14 adopts a discrimination result of the first discrimination algorithm 14a when a risk of erroneous discrimination by the first discrimination algorithm 14a is low, and adopts a discrimination result of the second discrimination algorithm 14b when a risk of erroneous discrimination by the first discrimination algorithm 14a is high. A level of the risk of erroneous discrimination is determined by the magnitude of a predetermined feature amount included in a plurality of feature amounts and a threshold value. That is, when the predetermined feature amount included in the plurality of feature amounts is larger than the predetermined threshold value, a discrimination result by one of the discrimination algorithms 14a and 14b is adopted, and when the predetermined feature amount is smaller than the predetermined threshold value, a discrimination result by the other one of the discrimination algorithms 14a and 14b is adopted. In other words, the first discrimination algorithm 14a is adopted when the predetermined feature amount is smaller (or larger) than the predetermined threshold value, and the second discrimination algorithm 14b is adopted when the predetermined feature amount is larger (or smaller) than the predetermined threshold value.

The predetermined threshold value is a value determined based on a comparison between discrimination accuracy by the first discrimination algorithm 14a and discrimination accuracy by the second discrimination algorithm 14b when the predetermined feature amount changes. In other words, the predetermined threshold value is a value of the predetermined feature amount when the height of the discrimination accuracy is reversed between the first discrimination algorithm 14a and the second discrimination algorithm 14b. Therefore, in a range where the predetermined feature amount is smaller than the predetermined threshold value, the discrimination accuracy by the first discrimination algorithm 14a is higher (or lower) than the discrimination accuracy by the second discrimination algorithm 14b. In a range where the predetermined feature amount is larger than the predetermined threshold value, the discrimination accuracy by the second discrimination algorithm 14b is higher (or lower) than the discrimination accuracy by the first discrimination algorithm 14a. Further, the discrimination unit 14 adopts a discrimination result of one of the discrimination algorithms 14a and 14b having the higher discrimination accuracy based on the magnitude relationship between the predetermined feature amount and the predetermined threshold value. Note that the discrimination accuracy of the discrimination algorithms 14a and 14b changes over time as the fusion splicer 10 is operated. The above-mentioned predetermined threshold value is determined, for example, by sequentially calculating the discrimination accuracies of the discrimination algorithms 14a and 14b while the fusion splicer 10 is in operation.

### (System B)

When the type of each of the pair of optical fibers can be discriminated by the first discrimination algorithm 14a, the discrimination unit 14 adopts the discrimination result. When the type of each of the pair of optical fibers cannot be discriminated by the first discrimination algorithm 14a, the discrimination unit 14 adopts the discrimination result by the second discrimination algorithm 14b. Here, "the optical fiber type can be discriminated" means that the optical fiber type corresponding to the plurality of feature amounts extracted by the feature amount extraction unit 13 is present in the first discrimination algorithm 14a. "The optical fiber type cannot be discriminated" means that the optical fiber type corresponding to the plurality of feature amounts extracted by the feature amount extraction unit 13 is not present in the first discrimination algorithm 14a. In this system B, the discrimination unit 14 may first execute the first discrimination algorithm 14a, and when the discrimination algorithm 14a cannot discriminate the type of each of the pair of optical fibers, the second discrimination algorithm 14b may be executed. Alternatively, the discrimination unit 14 may execute the first discrimination algorithm 14a and the second discrimination algorithm 14b in parallel.

### (System C)

In this system, first, the imaging unit 12 images the pair of optical fibers F1 and F2 at least two times to generate imaging data PX and PY for at least two times. The feature amount extraction unit 13 extracts at least two feature amount groups consisting of a plurality of feature amounts from at least two times of imaging data PX and PY. When a variation of predetermined feature amounts between at least two feature amount groups is larger than a threshold value, the discrimination unit 14 adopts a discrimination result obtained by one of the discrimination algorithms 14a and 14b, that is, the algorithm having a smaller decrease in discrimination accuracy due to the variation of the predetermined feature amount. When the variation of the predetermined feature amounts is smaller than the threshold value, the discrimination unit 14 adopts a discrimination result obtained by one of the discrimination algorithms 14a and 14b. The predetermined feature amount is, for example, the outer diameter of the core. In this system, the imaging positions of at least two times of the imaging data PX and PY in the optical axis direction of the pair of optical fibers F1 and F2 may be identical to each other or different from each other. The imaging data PX and PY having imaging positions different from each other are obtained, for example, by moving the imaging unit 12 in the optical axis direction of the pair of optical fibers F1 and F2 for each imaging.

### (System D)

Also in this system, first, the imaging unit 12 images the pair of optical fibers F1 and F2 at least two times to generate imaging data PX and PY for at least two times. The feature amount extraction unit 13 extracts at least two feature amount groups consisting of a plurality of feature amounts from at least two times of imaging data PX and PY. The discrimination unit 14 executes both the discrimination algorithms 14a and 14b based on at least two feature amount groups. Among at least two discrimination results obtained by the first discrimination algorithm 14a and at least two discrimination results obtained by the second discrimination algorithm 14b, the discrimination unit 14 adopts the at least two discrimination results with smaller variation of discrimination results. Also in this system, the imaging positions of at least two times of imaging data PX and PY in the optical axis direction of the pair of optical fibers F1 and F2 may be identical to each other or different from each other.

The discrimination result adopted by the discrimination unit 14 is displayed on the monitor 5. When the type of each of the pair of optical fibers displayed on the monitor 5 is erroneous, a user inputs a correct type via the input device 10d and corrects the discrimination result. In this case, the discrimination unit 14 has made an erroneous discrimination, and this correction is fed back to the discrimination accuracy of each of the discrimination algorithms 14a and 14b described above. In examples, not being part of the claimed invention, the user may input the type of each of the pair of optical fibers via the input device 10d regardless of the discrimination result by the discrimination unit 14. In that case, the input by the user is preferentially adopted, and the type of each of the pair of optical fibers is specified. Alternatively, by selecting one of manufacturing conditions set in advance for each type of optical fiber, the input may be replaced with input of the corresponding type of optical fiber itself. In this case, correctness of the discrimination result of each of the discrimination algorithms 14a and 14b is fed back to the discrimination accuracy.

The fusion control unit 15 controls an operation of the splicing unit 3. That is, the fusion control unit 15 receives an operation of a switch by the user and controls arc discharge and a contact operation between the tips of the pair of optical fibers in the splicing unit 3. The contact operation between the tips of the pair of optical fibers includes a positioning process of the optical fibers by the fiber positioning portion 3b, that is, control of a tip position of each optical fiber. The control of the arc discharge includes control of discharge power, a discharge start timing, and a discharge end timing. Various splicing conditions such as the tip position of the optical fiber and the discharge power are preset for each combination of the types of pair of optical fibers, and are stored in, for example, the ROM 10c. The fusion control unit 15 selects a splicing condition according to a combination of the types of pair of optical fibers discriminated by the discrimination unit 14. That is, the splicing unit 3 recognizes the combination of the types of pair of optical fibers based on the discrimination result in the discrimination unit 14, and fusion-splices the pair of optical fibers to each other under the splicing conditions according to the combination of the types of pair of optical fibers.

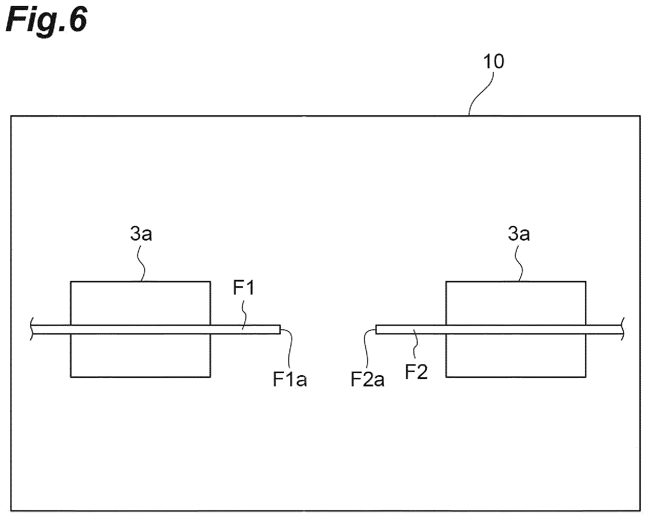

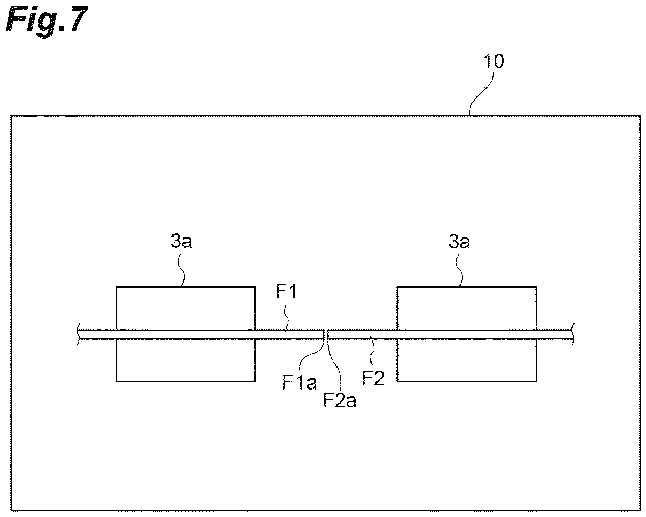

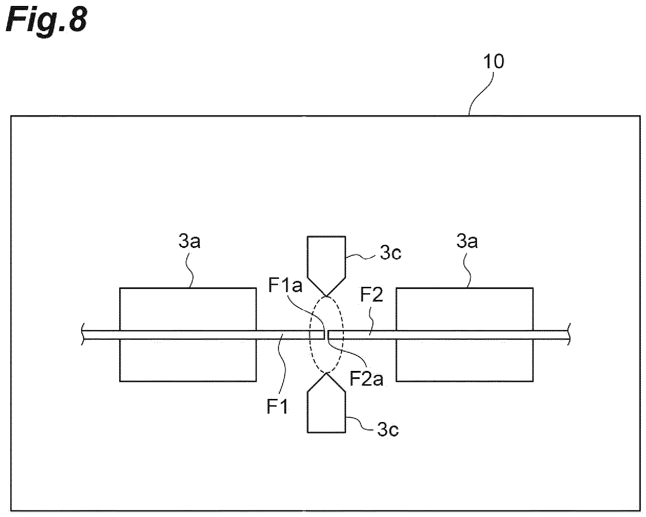

The operation of the splicing unit 3 is as follows. First, as illustrated in FIG. 6, the user causes the optical fiber holders 3a to hold a pair of optical fibers F1 and F2 to be spliced, respectively. In this instance, an end face F1a of the optical fiber F1 and an end face F2a of the optical fiber F2 are disposed to face each other. Next, the user instructs the fusion splicer 10 to start fusion splicing. This instruction is given, for example, via a switch input. In response to this instruction, as illustrated in FIG. 7, the fusion control unit 15 positions the optical fibers F1 and F2 based on positions of the end faces F1a and F2a set as splicing conditions. Thereafter, as illustrated in FIG. 8, the fusion control unit 15 starts arc discharge between the pair of discharge electrodes 3c.

Immediately after the start of the arc discharge, the end faces F1a and F2a are separated from each other. The arc discharge corresponds to preliminary discharge for pre-softening the end faces F1a and F2a before fusion. When the arc discharge is started, the fusion control unit 15 controls the position of the fiber positioning portion 3b to bring the end faces F1a and F2a closer to each other and bring the end faces F1a and F2a into contact with each other. Then, the fusion control unit 15 performs main discharge by continuing the arc discharge. As a result, the end faces F1a and F2a are further softened and fused to each other.

In the present embodiment, the splicing conditions include at least one of the following items: the positions of the end faces F1a and F2a before the start of discharge; an interval between the end faces F1a and F2a before the start of discharge; a preliminary discharge time; a main discharge time; the pushing amount after the end faces F1a and F2a are in contact with each other; the pull-back amount after mutually pushing the respective end faces F1a and F2a; preliminary discharge power; main discharge power; and discharge power at the time of pulling back.

The positions of the respective end faces F1a and F2a before the start of discharge refer to positions of the respective end faces F1a and F2a with respect to a line connecting central axes of a pair of discharge electrodes 3c, that is, discharge central axis, at a state illustrated in FIG. 7, that is, at the start of the preliminary discharge. Depending on the positions of these end faces, a distance between the discharge center and the respective end faces F1a, F2a changes. As a result, the heating amount, that is, melting amount increases or decreases. In addition, a time required for movement until the end faces F1a, F2a come into contact with each other changes. An interval between the respective end faces F1a and F2a before the start of discharge refers to an interval between the respective end faces F1a and F2a at a state illustrated in FIG. 7, that is, at the start of the preliminary discharge. Depending on this interval, a time required for movement until the respective end faces F1a and F2a come into contact with each other changes. The preliminary discharge time refers to a time from the start of arc discharge in the state illustrated in FIG. 7 to the start of relative movement of the optical fibers F1 and F2 for bringing the end faces F1a and F2a into contact with each other. The main discharge time refers to a time from when the end faces F1a and F2a come into contact with each other until the end of the arc discharge, in other words, until the time when application of a voltage to the pair of discharge electrodes 3c is suspended. Preliminary discharge and main discharge are continuously performed in terms of time. The pushing amount after the end faces F1a and F2a come into contact with each other refers to a moving distance of the optical fiber holders 3a when the optical fibers F1 and F2 are further relatively moved in the same direction during discharge after the optical fibers F1 and F2 are relatively moved to bring the end faces F1a and F2a into contact with each other. The pull-back amount after mutually pushing the end faces F1a and F2a refers to a moving distance of the optical fiber holders 3a when the optical fibers F1 and F2 are relatively moved in the opposite directions, that is, directions in which the end faces F1a and F2a are separated from each other, during discharge after the end faces F1a and F2a are further pushed after the end faces F1a and F2a are brought into contact with each other. The preliminary discharge power refers to arc discharge power in a period from start of arc discharge in the state illustrated in FIG. 7 to start of relative movement of the optical fibers F1 and F2 for bringing the end faces F1a and F2a into contact with each other.

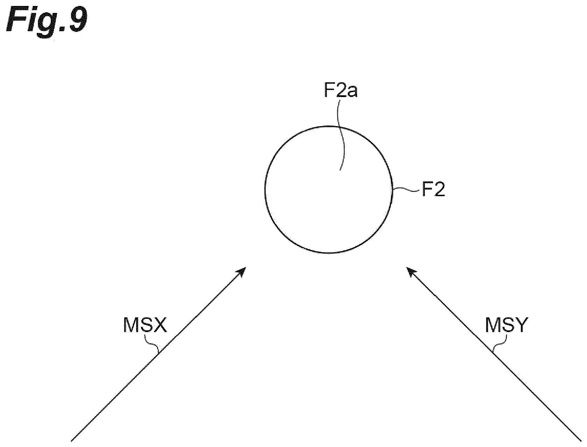

Here, FIG. 9 is a diagram of the end face F2a of the one optical fiber F2 as viewed from a front, that is, in an optical axis direction. Arrows MSX and MSY in the figure indicate imaging directions by the imaging unit 12. That is, in this example, at least two imaging units 12 are installed, and the two imaging units 12 respectively image the end faces F1a and F2a from radial directions of the optical fibers F1 and F2, which are directions orthogonal to each other. A light source for illuminating the optical fibers F1 and F2 is disposed at a position facing the imaging units 12 with the optical fibers F1 and F2 interposed therebetween. The light source is, for example, a light-emitting diode.

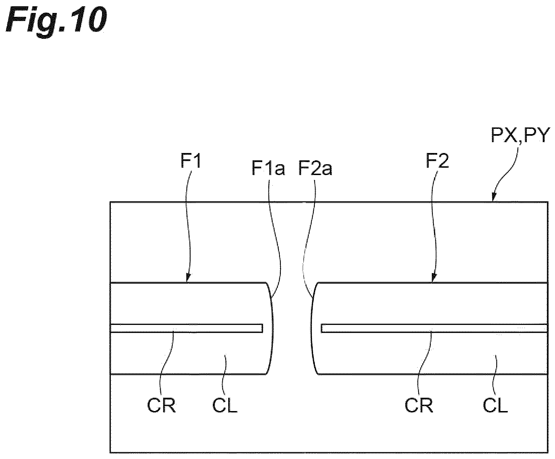

FIG. 10 is a diagram schematically illustrating imaging data PX obtained by the imaging unit 12 that images an image from a direction MSX and imaging data PY obtained by the imaging unit 12 that images an image from a direction MSY. As illustrated in FIG. 10, in the imaging data PX and PY, the positions and shapes of the optical fibers F1 and F2 are confirmed by contours of a core CR and cladding CL. The core CR is brightened by illumination light from the light source. The cladding CL is darkened by refraction of the illumination light from the light source.

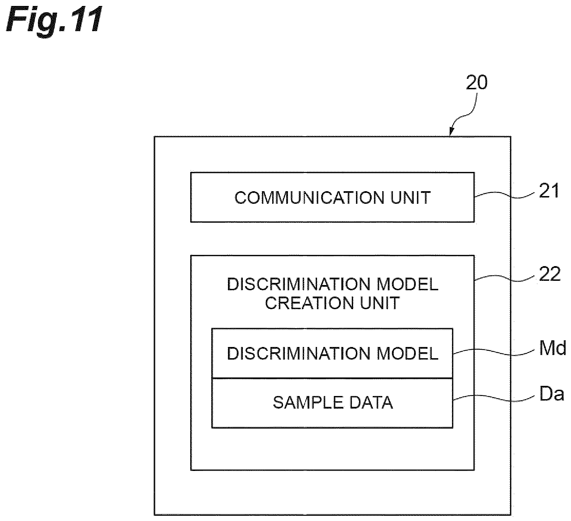

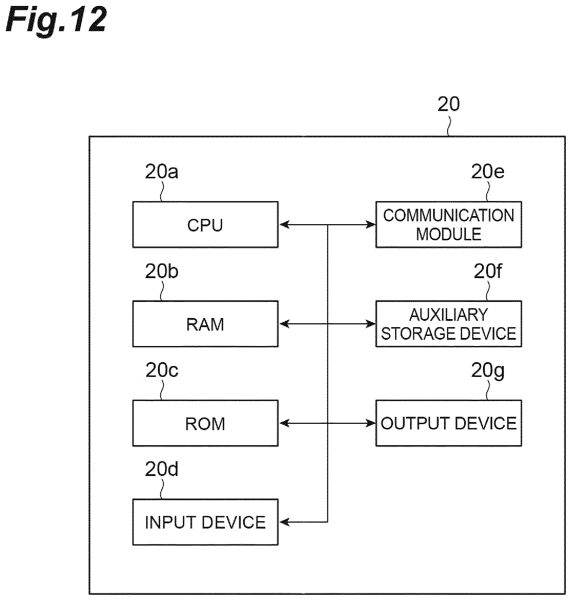

FIG. 11 is a block diagram illustrating a functional configuration of the model creation device 20. FIG. 12 is a block diagram illustrating a hardware configuration of the model creation device 20. As illustrated in FIG. 11, the model creation device 20 functionally includes a communication unit 21 and a discrimination model creation unit 22. As illustrated in FIG. 12, the model creation device 20 includes a computer including hardware such as a CPU 20a, a RAM 20b, a ROM 20c, an input device 20d, a communication module 20e, an auxiliary storage device 20f, an output device 20g, etc. By operating these components by a program, etc., each function of the model creation device 20 is implemented.

The communication unit 21 illustrated in FIG. 11 communicates with the plurality of fusion splicers 10 via the information communication network 30 (see FIG. 1) such as the Internet. The communication unit 21 receives information related to the feature amounts extracted from the imaging data PX and PY and the types of optical fibers F1 and F2 from the plurality of fusion splicers 10 via the information communication network 30. The communication unit 21 may receive the imaging data PX and PY itself instead of the feature amounts extracted from the imaging data PX and PY. In that case, the model creation device 20 extracts the feature amounts from the imaging data PX and PY. The information related to the types of optical fibers F1 and F2 may be only information input by the user. In other words, the communication unit 21 receives, from each fusion splicer 10, information related to the types of optical fibers F1 and F2 input by the user and the feature amounts, extracted from the imaging data PX and PY of the optical fibers F1 and F2, or the imaging data itself. The information related to the types of optical fibers F1 and F2 input by the user includes the case of being replaced with input of the corresponding optical fiber type itself by selecting one of preset manufacturing conditions for each optical fiber type. The communication unit 21 provides the received information to the discrimination model creation unit 22 as sample data Da indicating a correspondence relationship between the feature amounts obtained from the imaging data PX and PY of the optical fibers F1 and F2 and the types of optical fibers F1 and F2.

The discrimination model creation unit 22 performs machine learning using the sample data Da provided by the communication unit 21. The discrimination model creation unit 22 creates the discrimination model Md for discriminating the types of optical fibers F1 and F2 based on the imaging data PX and PY. Machine learning is preferably deep learning. As a machine learning technique, it is possible to apply various techniques included in so-called supervised learning such as a neural network and a support vector machine. The discrimination model creation unit 22 continuously performs machine learning using a huge amount of the sample data Da obtained from a large number of fusion splicer 10 in operation, and enhances accuracy of the discrimination model Md. The discrimination model creation unit 22 of the present embodiment classifies the plurality of fusion splicers 10 into two or more groups presumed to have similar tendencies of the imaging data PX and PY. Then, the discrimination model creation unit 22 collects the sample data Da for each group and creates a discrimination model Md for each group. Creating the discrimination model Md for each group means that machine learning is performed using only the sample data Da obtained from a plurality of fusion splicers 10 belonging to a certain group, and the created discrimination model Md is provided only to the fusion splicers 10 belonging to the group.

The two or more groups presumed to have similar tendencies of the imaging data PX and PY are classified based on, for example, an inspection result of the fusion splicer 10, similarity of an inspection condition of the fusion splicer 10, similarity of a manufacturer and a date and time of manufacture of the fusion splicer 10, similarity of a manufacturer and a date and time of manufacture of the imaging unit 12, similarity of environmental conditions at a usage place of the fusion splicer 10, similarity of a deterioration state of the fusion splicer 10, or similarity of a type of optical fiber to be spliced. The similarity of an inspection result of the fusion splicer 10 is, for example, a similarity of luminance distribution in the imaging data PX and PY. The similarity of an inspection condition of the fusion splicer 10 is a similarity of environmental conditions when a reference optical fiber is imaged during inspection of each fusion splicer 10, for example, a similarity of at least one selected from temperature (atmospheric temperature), humidity, and atmospheric pressure when a reference optical fiber is imaged. The similarity of environmental conditions at a usage place of the fusion splicer 10 is, for example, at least one selected from temperature, humidity, and atmospheric pressure at a usage place of the fusion splicer 10. The similarity of a deterioration state of the fusion splicer 10 is, for example, at least one of the following matters: the number of discharges of the fusion splicer 10; splicing frequency; a degree of contamination on the discharge electrodes 3c; a dimming state of the light source that illuminates the optical fiber from the opposite side from the imaging unit 12; a degree of contamination on a lens; and device diagnosis results.

The discrimination model Md created by collecting sample data Da for each group in this way is transmitted and provided to the fusion splicer 10 belonging to each corresponding group via the communication unit 21. The discrimination algorithm 14b of the discrimination unit 14 of each fusion splicer 10 obtains the discrimination model Md corresponding to the group to which each fusion splicer 10 belongs from the model creation device 20, and discriminates a type of each of the pair of optical fibers F1 and F2.

The sample data Da used for machine learning of the discrimination model creation unit 22 includes both sample data when the type of each of the pair of optical fibers F1 and F2 can be discriminated by the first discrimination algorithm 14a, and sample data when the type of each of the pair of optical fibers F1 and F2 cannot be discriminated and when the type of each of the pair of optical fibers F1 and F2 is erroneously discriminated by the first discrimination algorithm 14a. Alternatively, the sample data Da used for machine learning of the discrimination model creation unit 22 may include only the sample data when the type of each of the pair of optical fibers F1 and F2 can be discriminated by the first discrimination algorithm 14a. In that case, the discrimination unit 14 of each fusion splicer 10 performs additional machine learning using sample data thereof when the type of each of the pair of optical fibers F1 and F2 cannot be discriminated and when the type of each of the pair of optical fibers F1 and F2 is erroneously discriminated by the first discrimination algorithm 14a, and improves the discrimination model Md owned by the discrimination unit 14.

The sample data Da used for machine learning of the discrimination model creation unit 22 may include both sample data when the type of each of the pair of optical fibers F1 and F2 can be discriminated by the first discrimination algorithm 14a, and sample data when the type of each of the pair of optical fibers F1 and F2 cannot be discriminated and when the type of each of the pair of optical fibers F1 and F2 is erroneously discriminated by the first discrimination algorithm 14a. In that case, the discrimination unit 14 of each fusion splicer 10 may perform additional machine learning using sample data thereof when the type of each of the pair of optical fibers F1 and F2 cannot be discriminated or is erroneously discriminated by the first discrimination algorithm 14a to improve the own discrimination model Md. However, the sample data used in the additional machine learning is not include the sample data Da provided to the model creation device 20. In this case, sample data that cannot be discriminated or that is erroneously discriminated for a certain period or number from shipment of the fusion splicer 10 may be provided to machine learning of the discrimination model creation unit 22. Sample data that cannot be discriminated or that is erroneously discriminated thereafter may be provided to the additional machine learning in the discrimination unit 14 of each fusion splicer 10.

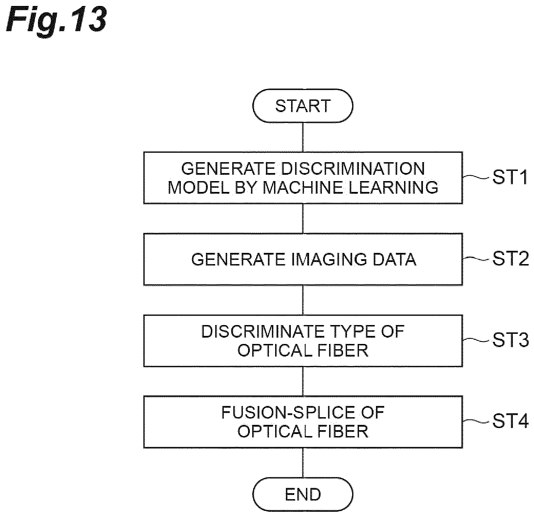

FIG. 13 is a flowchart illustrating a method for fusion-splicing an optical fiber according to the present embodiment. This method can be suitably realized by using the fusion splicing system 1A described above. First, as a model creation process ST1, machine learning is performed using sample data Da indicating a correspondence relationship between a plurality of feature amount obtained from imaging data of an optical fiber and a type of the optical fiber. And then a discrimination model Md for discriminating types of optical fibers F1 and F2 to be spliced based on imaging data PX and PY of the optical fibers F1 and F2 is created. In this model creation process ST1, a plurality of fusion splicers 10 is classified into two or more groups presumed to have similar tendencies of the imaging data PX and PY. And then the discrimination model Md is created by collecting the sample data Da for each group.

Next, as an imaging process ST2, the pair of optical fibers F1 and F2 is imaged to generate the imaging data PX and PY. Subsequently, as a discrimination process ST3, the type of each of the pair of optical fibers F1 and F2 is discriminated based on a plurality of feature amounts obtained from the imaging data PX and PY generated in the imaging process ST2. In this discrimination process ST3, a discrimination result by any of the discrimination algorithms 14a and 14b for discriminating the types of optical fibers F1 and F2 is adopted. As described above, the first discrimination algorithm 14a is predetermined by a method other than machine learning based on a correlation between the plurality of feature amounts obtained from the imaging data PX and PY of the optical fibers F1 and F2 and the types of optical fibers F1 and F2. Further, the second discrimination algorithm 14b includes the discrimination model Md created in the model creation process ST1. The discrimination model Md corresponds to a group to which the fusion splicer 10 performing the discrimination process ST3 belongs. Subsequently, as the splicing process ST4, the pair of optical fibers F1 and F2 are fusion-spliced to each other under a splicing condition according to a combination of types of pair of optical fibers F1 and F2 based on a discrimination result in the discrimination process ST3.

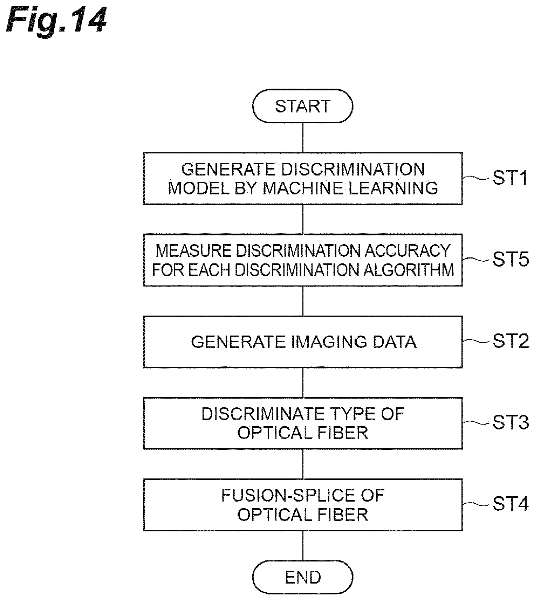

As shown in FIG. 14, a process ST5 may be added in the method described above. In the process ST5, the discrimination accuracy is measured for each of the discrimination algorithms 14a and 14b. The process ST5 is performed before the imaging process ST2 or the discrimination process ST3. Specifically, first, two or more optical fibers of known types are imaged by the imaging unit 12 to generate imaging data PX and PY. Next, the feature amount extraction unit 13 extracts a plurality of feature amounts from the imaging data PX and PY. Then, the discrimination unit 14 discriminates the types of the two or more optical fibers based on the plurality of feature amounts by both of the discrimination algorithms 14a and 14b, compares the discrimination result with a known type, and obtains the discrimination accuracy of each of the discrimination algorithms 14a and 14b. In the discrimination process ST3, one of the discrimination algorithms 14a and 14b having a higher discrimination accuracy in the process ST5 is adopted.

Effects obtained by the fusion splicing system 1A, the fusion splicer 10, and the fusion-splicing method of the present embodiment described above will be described. In the present embodiment, the types of optical fibers F1 and F2 are discriminated using the discrimination algorithms 14a and 14b. Of these discrimination algorithms 14a and 14b, the first discrimination algorithm 14a is predetermined by a method other than machine learning based on a correlation between a plurality of feature amounts obtained from the imaging data of the optical fibers F1 and F2 and the types of optical fibers F1 and F2, and the same discrimination accuracy as before can be expected. Further, the second discrimination algorithm 14b includes a discrimination model Md created by machine learning using sample data Da indicating a correspondence relationship between the plurality of feature amounts and the types of optical fibers F1 and F2. Therefore, high-precision discrimination based on machine learning can be expected for the types of optical fibers F1 and F2 that cannot be discriminated or tend to be erroneously discriminated by the first discrimination algorithm 14a. Therefore, according to the present embodiment, by adopting a discrimination result by any of the discrimination algorithms 14a and 14b, the discrimination accuracy of the types of optical fibers F1 and F2 may be improved when compared to a conventional case.

As mentioned above, machine learning may be deep learning. In this case, the discrimination accuracy of the types of optical fibers F1 and F2 may be further improved.

As described above, the discrimination unit 14 (the discrimination process ST3) adopts a discrimination result by one of the discrimination algorithms 14a and 14b when a predetermined feature amount included in the plurality of feature amounts is larger than a threshold value, and adopts a discrimination result by the other one of the discrimination algorithms 14a and 14b when the predetermined feature amount is smaller than the threshold value. For example, by such a method, it is possible to easily select a discrimination result of one of the discrimination algorithms 14a and 14b to be adopted. Further, in this case, the threshold value may be a value determined based on a comparison between the discrimination accuracy by the first discrimination algorithm 14a and the discrimination accuracy by the second discrimination algorithm 14b when the predetermined feature amount changes. In this way, the discrimination accuracy of the types of optical fibers F1 and F2 may be further improved.

As described above, the discrimination unit 14 (the discrimination process ST3) adopts the discrimination result thereof when the type of each of the optical fibers F1 and F2 can be discriminated by the first discrimination algorithm 14a, and adopts the discrimination result by the second discrimination algorithm 14b when the type of each of the optical fibers F1 and F2 cannot be discriminated by the first discrimination algorithm 14a. For example, by such a method, it is possible to improve the discriminating accuracy of the types of optical fibers F1 and F2. In this case, the discrimination unit 14 (the discrimination process ST3) may first execute the first discrimination algorithm 14a, and then execute the second discrimination algorithm 14b when the type of each of the optical fibers F1 and F2 cannot be discriminated by the first discrimination algorithm 14a. As a result, the amount of calculation of the discrimination unit 14 (in the discrimination process ST3) may be reduced. Alternatively, the discrimination unit 14 (the discrimination process ST3) may execute the first discrimination algorithm 14a and the second discrimination algorithm 14b in parallel. As a result, it is possible to shorten a time required to obtain a final discrimination result.

As described above, the imaging unit 12 (the imaging process ST2) images the pair of optical fibers F1 and F2 at least two times and generates imaging data PX and PY for at least two times. And then, when the variation of a predetermined feature amount between at least two feature amount groups consisting of the plurality of feature amounts obtained from at least two imaging data PX and PY is larger than a threshold value, the discrimination unit 14 (the discrimination process ST3) adopts a discrimination result obtained by one of the first and second discrimination algorithms 14a and 14b. When the variation of the predetermined feature amount is smaller than the threshold value, the discrimination unit 14 (the discrimination process ST3) adopts a discrimination result obtained by one of the first and second discrimination algorithms 14a and 14b. As a result, it is possible to further improve the discrimination accuracy of the type of optical fibers F1 and F2.

As described above, the imaging unit (the imaging process ST2) images the pair of optical fibers F1 and F2 at least two times to generate imaging data PX and PY for at least two times. And then, the discrimination unit 14 (the discrimination process ST3) executes the first and second discrimination algorithms 14a and 14b based on at least two feature amount groups consisting of the plurality of feature amounts obtained from at least two imaging data PX and PY. Note that, among at least two discrimination results obtained by the first discrimination algorithm 14a and at least two discrimination results obtained by the second discrimination algorithm 14b, the discrimination unit 14 (the discrimination process ST3) may adopt the at least two discrimination results with smaller variation of discrimination results. As a result, it is possible to further improve the discrimination accuracy of the type of optical fibers F1 and F2.

As described above, the model creation device 20 may create the discrimination model Md for each group by classifying the plurality of fusion splicers 10 into two or more groups presumed to have similar tendencies of the imaging data PX and PY. Then, the second discrimination algorithm 14b of the discrimination unit 14 of each fusion splicer 10 may obtain the discrimination model Md corresponding to a group to which each fusion splicer 10 belongs from the model creation device 20. As a result, since machine learning can be performed only within a group in which the tendencies of the imaging data PX and PY are similar, for example, a group in which there is little mechanical and structural variation in each fusion splicer 10, or a group in which there is little mechanical and structural variation in the imaging unit 12. Therefore, it is possible to further improve the discrimination accuracy of the types of optical fibers F1 and F2 by the discrimination algorithm 14b.

As described above, the sample data Da used for machine learning of the model creation device 20 may include both sample data when the type of each of the optical fibers F1 and F2 can be discriminated by the first discrimination algorithm 14a, and sample data when the type of each of the optical fibers F1 and F2 cannot be discriminated and when the type of each of the optical fibers F1 and F2 is erroneously discriminated by the first discrimination algorithm 14a. In this case, it is possible to include the types of optical fibers F1 and F2, which are weak points of the first discrimination algorithm 14a, in machine learning of the model creation device 20, and to improve overall discrimination accuracy of the types of optical fibers F1 and F2.

As described above, the sample data Da used for machine learning of the model creation device 20 may include only the sample data when the type of each of the optical fibers F1 and F2 can be discriminated by the first discrimination algorithm 14a, and the discrimination unit 14 of each fusion splicer 10 may perform machine learning using sample data thereof when the type of each of the optical fibers F1 and F2 cannot be discriminated and when the type of each of the optical fibers F1 and F2 is erroneously discriminated by the first discrimination algorithm 14a to improve the discrimination model Md. In this case, discrimination accuracy of the second discrimination algorithm 14b may be improved for each fusion splicer 10 for the types of optical fibers F1 and F2 that cannot be discriminated by the first discrimination algorithm 14a due to mechanical and structural variations of each fusion splicer 10, for example, mechanical and structural variations of the imaging unit 12.

As described above, the sample data Da used for machine learning of the model creation device 20 may include sample data when the type of each of the optical fibers F1 and F2 can be discriminated by the first discrimination algorithm 14a, and sample data when the type of each of the optical fibers F1 and F2 cannot be discriminated and when the type of each of the optical fibers F1 and F2 is erroneously discriminated by the first discrimination algorithm 14a. Then, the discrimination unit 14 of each fusion splicer 10 may perform machine learning using sample data thereof when the type of each of the optical fibers F1 and F2 cannot be discriminated and is erroneously discriminated by the discrimination algorithm 14a to improve the discrimination model Md. However, sample data provided to the model creation device 20 is excluded. In this case, it is possible to include the types of optical fibers F1 and F2, which are weak points of the discrimination algorithm 14a, in machine learning of the model creation device 20. In addition, it is possible to improve the discrimination accuracy of the discrimination algorithm 14b for each fusion splicer 10 for the types of optical fiber F1 and F2 that cannot be discriminated by the discrimination algorithm 14a due to mechanical and structural variations of the imaging unit 12 of each fusion splicer 10. Therefore, it is possible to further improve the overall discrimination accuracy of the types of optical fibers F1 and F2.

As described above, two or more optical fibers of known types may be imaged to generate imaging data PX and PY, the types of the two or more optical fibers may be discriminated by the first and second discrimination algorithms 14a and 14b based on a plurality of feature amounts obtained from the imaging data PX and PY. Then, one of the first and second discrimination algorithms 14a and 14b with the higher discrimination accuracy may be adopted in the discrimination process ST3. As a result, it is possible to further improve the discrimination accuracy of the type of optical fibers F1 and F2.

The fusion splicer, the fusion splicing system, and the method for fusion-splicing the optical fiber according to the present disclosure are not limited to the above-described embodiment, and various other modifications are possible.

In the fusion splicer 10 according to the above embodiment, any one of the discrimination algorithms 14a and 14b is used to fusion-splice the pair of optical fibers to each other under the connection conditions corresponding to the combination of the types of the pair of optical fibers, but in addition, any one of the discrimination algorithms 14a and 14b may be used to align the pair of optical fibers after the type of the pair of optical fibers has been discriminated, for example, to recognize the position of the core.

### Reference Signs List

1A: fusion splicing system
2: housing
3: splicing unit
3a: optical fiber holder
3b: fiber positioning portion
3c: discharge electrode
4: heater
5: monitor
6: windshield cover
6a: side face
6b: introduction port
10: fusion splicer
10a: CPU
10b: RAM
10c: ROM
10d: input device
10e: auxiliary storage device
10f: output device
11: communication unit
12: imaging unit
13: feature amount extraction unit
14: discrimination unit
14a: first discrimination algorithm
14b: second discrimination algorithm
15: fusion control unit
20: model creation device
20a: CPU
20b: RAM
20c: ROM
20d: input device
20e: communication module
20f: auxiliary storage device
20g: output device
21: communication unit
22: discrimination model creation unit
30: information communication network
CL: cladding
CR: core
Da: sample data
F1, F2: optical fiber
F1a,F2a: end face
Md: discrimination model
MSX, MSY: direction
PX, PY: imaging data
ST1: model creation process
ST2: imaging process
ST3: discrimination process
ST4: splicing process.

## Claims

1. A fusion splicer (10) comprising:
an imaging unit (12) configured to image a pair of optical fibers (F1, F2) to generate imaging data (PX, PY);
a discrimination unit (14) configured to discriminate a type of each of the pair of optical fibers based on a plurality of feature amounts obtained from imaging data provided from the imaging unit, the discrimination unit having first (14a) and second (14b) discrimination algorithms for discriminating a type of optical fiber and adopting a discrimination result by any one of the first and second discrimination algorithms, the first discrimination algorithm being predetermined by a method, other than machine learning, based on a correlation between a plurality of feature amounts obtained from imaging data of an optical fiber and a type of optical fiber from which the feature amounts are obtained, the second discrimination algorithm including a discrimination model (Md) for discriminating a type of optical fiber to be spliced based on imaging data of the optical fiber to be spliced, the discrimination model being created by machine learning using sample data (Da) indicating a correspondence relationship between a plurality of feature amounts obtained from imaging data of an optical fiber and a type of optical fiber from which the feature amounts are obtained; and
a splicing unit (3) configured to fusion-splice the pair of optical fibers to each other under a splicing condition according to a combination of the types of pair of optical fibers based on a discrimination result in the discrimination unit,
wherein the fusion splicer includes any one of the following configurations (a) to (d):
(a) the discrimination unit adopts a discrimination result by one of the first and second discrimination algorithms when a predetermined feature amount included in the plurality of feature amounts is larger than a threshold value, and adopts a discrimination result by another one of the first and second discrimination algorithms when the predetermined feature amount is smaller than the threshold value;
(b) when a type of each of the pair of optical fibers is allowed to be discriminated by the first discrimination algorithm, the discrimination unit adopts a discrimination result thereof, and when a type of each of the pair of optical fibers is not allowed to be discriminated by the first discrimination algorithm, the discrimination unit adopts a discrimination result by the second discrimination algorithm;
(c) the imaging unit images the pair of optical fibers at least two times to generate imaging data for at least two times,
the discrimination unit adopts a discrimination result obtained by one of the first and second discrimination algorithms when a variation of a predetermined feature amount between at least two feature amount groups consisting of the plurality of feature amounts obtained from at least two imaging data provided by the imaging unit is larger than a threshold value, and adopts a discrimination result obtained by any one of the first and second discrimination algorithms when a variation of the predetermined feature amount is smaller than the threshold value; and (d) the imaging unit images the pair of optical fibers at least two times to generate imaging data for at least two times,
the discrimination unit executes the first and second discrimination algorithms based on at least two feature amount groups consisting of the plurality of feature amounts obtained from at least two imaging data provided by the imaging unit, and
among at least two discrimination results obtained by the first discrimination algorithm and at least two discrimination results obtained by the second discrimination algorithm, the discrimination unit adopts at least two discrimination results with smaller variation of discrimination results.

2. The fusion splicer according to claim 1, wherein the machine learning is deep learning.

3. The fusion splicer according to claim 1 or 2, wherein in configuration (a), the threshold value is a value determined based on a comparison between discrimination accuracy by the first discrimination algorithm and discrimination accuracy by the second discrimination algorithm when the predetermined feature amount changes.

4. The fusion splicer according to claim 1 or 2, wherein in configuration (b), the discrimination unit first executes the first discrimination algorithm, and executes the second discrimination algorithm when the type of each of the pair of optical fibers is not allowed to be discriminated by the first discrimination algorithm.

5. The fusion splicer according to claim 1 or 2, wherein in configuration (b), the discrimination unit executes the first discrimination algorithm and the second discrimination algorithm in parallel.

6. The fusion splicer according to claim 1 or 2, wherein in configuration (c) or (d), imaging positions of at least two times of imaging data in an optical axis direction of the pair of optical fibers are identical to each other.

7. The fusion splicer according to claim 1 or 2, wherein in configuration (c) or (d), imaging positions of at least two times of imaging data in an optical axis direction of the pair of optical fibers are different from each other.

8. A fusion splicing system (1A) comprising:
a plurality of fusion splicers, each of which is the fusion splicer according to any one of claims 1 to 7; and
a model creation device (20) configured to create the discrimination model by collecting the sample data from the plurality of fusion splicers to perform the machine learning, and provide the discrimination model to the plurality of fusion splicers.

9. The fusion splicing system according to claim 8, wherein
the model creation device classifies the plurality of fusion splicers into two or more groups presumed to have similar tendencies of imaging data to create the discrimination model for each group, and
the second discrimination algorithm of the discrimination unit of each of the fusion splicers obtains the discrimination model corresponding to a group to which each of the fusion splicers belongs from the model creation device.

10. The fusion splicing system according to claim 8 or 9, wherein the sample data used for the machine learning of the model creation device includes both the sample data when a type of each of the pair of optical fibers is allowed to be discriminated by the first discrimination algorithm, and the sample data when a type of each of the pair of optical fibers is not allowed to be discriminated and when the type of each of the pair of optical fibers is erroneously discriminated by the first discrimination algorithm.

11. The fusion splicing system according to claim 8 or 9, wherein
the sample data used for the machine learning of the model creation device exclusively includes the sample data when a type of each of the pair of optical fibers is allowed to be discriminated by the first discrimination algorithm, and
the discrimination unit of each of the fusion splicers performs the machine learning using the sample data thereof when a type of each of the pair of optical fibers is not allowed to be discriminated and when a type of each of the pair of optical fibers is erroneously discriminated by the first discrimination algorithm to improve the discrimination model.

12. The fusion splicing system according to claim 8 or 9 wherein
the sample data used for the machine learning of the model creation device includes both of the sample data when a type of each of the pair of optical fibers is allowed to be discriminated by the first discrimination algorithm, and the sample data when a type of each of the pair of optical fibers is not allowed to be discriminated and when a type of each of the pair of optical fibers is erroneously discriminated by the first discrimination algorithm, and
the discrimination unit of each of the fusion splicers performs the machine learning using the sample data thereof and excluding the sample data provided to the model creation device when a type of each of the pair of optical fibers is not allowed to be discriminated and when a type of each of the pair of optical fibers is erroneously discriminated by the first discrimination algorithm to improve the discrimination model.

13. A method for fusion-splicing an optical fiber, the method comprising:
generating imaging data by imaging a pair of optical fibers;
discriminating a type of each of the pair of optical fibers based on a plurality of feature amounts obtained from imaging data acquired in the generating, a discrimination result by any one of first and second discrimination algorithms for discriminating a type of optical fiber being adopted, the first discrimination algorithm being predetermined by a method, other than machine learning, based on a correlation between a plurality of feature amounts obtained from imaging data of an optical fiber and a type of optical fiber from which the feature amounts are obtained, the second discrimination algorithm including a discrimination model for discriminating a type of optical fiber to be spliced based on imaging data of the optical fiber to be spliced, the discrimination model being created by machine learning using sample data indicating a correspondence relationship between a plurality of feature amounts obtained from imaging data of an optical fiber and a type of optical fiber from which the feature amounts are obtained; and
fusion-splicing the pair of optical fibers to each other under a splicing condition according to a combination of the types of pair of optical fibers based on a discrimination result in the discriminating, wherein the method includes any one of the following features (a) to (d):
(a) in the discriminating, a discrimination result by one of the first and second discrimination algorithms is adopted when a predetermined feature amount included in the plurality of feature amounts is larger than a threshold value, and a discrimination result by another one of the first and second discrimination algorithms is adopted when the predetermined feature amount is smaller than the threshold value;
(b) in the discriminating, when a type of each of the pair of optical fibers is allowed to be discriminated by the first discrimination algorithm, a discrimination result thereof is adopted, and when a type of each of the pair of optical fibers is not allowed to be discriminated by the first discrimination algorithm, a discrimination result by the second discrimination algorithm is adopted;
(c) in the generating, the pair of optical fibers are imaged at least two times to generate imaging data for at least two times,
in the discriminating, a discrimination result obtained by one of the first and second discrimination algorithms is adopted when a variation of a predetermined feature amount between at least two feature amount groups consisting of the plurality of feature amounts obtained from at least two imaging data provided by the imaging unit is larger than a threshold value, and a discrimination result obtained by any one of the first and second discrimination algorithms is adopted when a variation of the predetermined feature amount is smaller than the threshold value; and
(d) in the generating, the pair of optical fibers are imaged at least two times to generate imaging data for at least two times,
in the discriminating, the first and second discrimination algorithms are executed based on at least two feature amount groups consisting of the plurality of feature amounts obtained from at least two imaging data provided by the imaging unit, and
among at least two discrimination results obtained by the first discrimination algorithm and at least two discrimination results obtained by the second discrimination algorithm, at least two discrimination results with smaller variation of discrimination results are adopted.

## Patentansprüche

1. Fusionsspleißer (10), umfassend:
eine Abbildungseinheit (12), die dazu konfiguriert ist, ein Paar von Glasfasern (F1, F2) abzubilden, um Bilddaten (PX, PY) zu erzeugen;
eine Unterscheidungseinheit (14), die dazu konfiguriert ist, einen Typ jeder des Paares von Glasfasern basierend auf einer Vielzahl von Merkmalsmengen zu unterscheiden, die aus Bilddaten erhalten werden, die von der Abbildungseinheit bereitgestellt werden, wobei die Unterscheidungseinheit einen ersten (14a) und einen zweiten (14b) Unterscheidungsalgorithmus zum Unterscheiden eines Typs der Glasfaser und zum Annehmen eines Unterscheidungsergebnisses durch einen des ersten und des zweiten Unterscheidungsalgorithmus aufweist, wobei der erste Unterscheidungsalgorithmus durch ein anderes Verfahren als maschinelles Lernen vorgegeben ist, basierend auf einer Korrelation zwischen einer Vielzahl von Merkmalsmengen, die aus Bilddaten einer Glasfaser und einem Typ einer Glasfaser erhalten werden, von der die Merkmalsmengen erhalten werden, wobei der zweite Unterscheidungsalgorithmus ein Unterscheidungsmodell (Md) zum Unterscheiden eines Typs einer zu spleißenden Glasfaser beinhaltet, basierend auf Bilddaten der zu spleißenden Glasfaser, wobei das Unterscheidungsmodell durch maschinelles Lernen unter Verwendung von Probedaten (Da) erzeugt wird, die eine Korrespondenzbeziehung zwischen einer Vielzahl von Merkmalsmengen, die aus Bilddaten einer Glasfaser und einem Typ einer Glasfaser, von der die Merkmalsmengen erhalten werden, anzeigen; und
eine Spleißeinheit (3), die dazu konfiguriert ist, das Paar von Glasfasern unter einer Spleißbedingung gemäß einer Kombination der Typen des Paares von Glasfasern basierend auf einem Unterscheidungsergebnis in der Unterscheidungseinheit miteinander fusionszuspleißen,
wobei der Fusionsspleißer eine der folgenden Konfigurationen (a) bis (d) beinhaltet:
(a) die Unterscheidungseinheit nimmt ein Unterscheidungsergebnis durch einen des ersten und zweiten Unterscheidungsalgorithmus an, wenn eine vorgegebene Merkmalsmenge, die in der Vielzahl von Merkmalsmengen enthalten ist, größer als ein Schwellenwert ist, und nimmt ein Unterscheidungsergebnis durch einen anderen des ersten und zweiten Unterscheidungsalgorithmus an, wenn die vorgegebene Merkmalsmenge kleiner als der Schwellenwert ist;
(b) wenn ein Typ jedes Paares von Glasfasern durch den ersten Unterscheidungsalgorithmus unterschieden werden darf, nimmt die Unterscheidungseinheit ein Unterscheidungsergebnis davon an, und wenn ein Typ jedes Paares von Glasfasern nicht durch den ersten Unterscheidungsalgorithmus unterschieden werden darf, nimmt die Unterscheidungseinheit ein Unterscheidungsergebnis durch den zweiten Unterscheidungsalgorithmus an;
(c) die Abbildungseinheit bildet das Paar von Glasfasern mindestens zweimal ab, um mindestens zweimal Bilddaten zu erzeugen,
die Unterscheidungseinheit nimmt ein Unterscheidungsergebnis an, das durch einen des ersten und zweiten Unterscheidungsalgorithmus erhalten wird, wenn eine Abweichung einer vorgegebenen Merkmalsmenge zwischen mindestens zwei Merkmalsmengengruppen, die aus der Vielzahl von Merkmalsmengen bestehen, die aus mindestens zwei von der Abbildungseinheit bereitgestellten Bilddaten erhalten werden, größer als ein Schwellenwert ist, und nimmt ein Unterscheidungsergebnis an, das durch einen des ersten und zweiten Unterscheidungsalgorithmus erhalten wird, wenn eine Abweichung der vorgegebenen Merkmalsmenge kleiner als der Schwellenwert ist; und
(d) die Abbildungseinheit bildet das Paar von Glasfasern mindestens zweimal ab, um für mindestens zwei Male Bilddaten zu erzeugen,
die Unterscheidungseinheit führt den ersten und zweiten Unterscheidungsalgorithmus basierend auf mindestens zwei Merkmalsmengengruppen aus, die aus der Vielzahl von Merkmalsmengen bestehen, die aus mindestens zwei von der Abbildungseinheit bereitgestellten Bilddaten erhalten werden, und
von mindestens zwei Unterscheidungsergebnissen, die durch den ersten Unterscheidungsalgorithmus erhalten werden, und mindestens zwei Unterscheidungsergebnissen, die durch den zweiten Unterscheidungsalgorithmus erhalten werden, nimmt die Unterscheidungseinheit mindestens zwei Unterscheidungsergebnisse mit geringerer Abweichung der Unterscheidungsergebnisse an.

2. Fusionsspleißer nach Anspruch 1, wobei das maschinelle Lernen tiefes Lernen ist.

3. Fusionsspleißer nach Anspruch 1 oder 2, wobei in der Konfiguration (a) der Schwellenwert ein Wert ist, der basierend auf einem Vergleich zwischen der Unterscheidungsgenauigkeit durch den ersten Unterscheidungsalgorithmus und der Unterscheidungsgenauigkeit durch den zweiten Unterscheidungsalgorithmus bestimmt wird, wenn sich die vorgegebene Merkmalsmenge ändert.

4. Fusionsspleißer nach Anspruch 1 oder 2, wobei in der Konfiguration (b) die Unterscheidungseinheit zuerst den ersten Unterscheidungsalgorithmus ausführt und den zweiten Unterscheidungsalgorithmus ausführt, wenn der Typ jeder des Paares von Glasfasern nicht durch den ersten Unterscheidungsalgorithmus unterschieden werden darf.

5. Fusionsspleißer nach Anspruch 1 oder 2, wobei in Konfiguration (b) die Unterscheidungseinheit den ersten Unterscheidungsalgorithmus und den zweiten Unterscheidungsalgorithmus parallel ausführt.

6. Fusionsspleißer nach Anspruch 1 oder 2, wobei in der Konfiguration (c) oder (d) die Abbildungspositionen von mindestens zwei Malen von Bilddaten in einer optischen Achsenrichtung des Paares von Glasfasern identisch zueinander sind.

7. Fusionsspleißer nach Anspruch 1 oder 2, wobei in der Konfiguration (c) oder (d) die Abbildungspositionen von mindestens zwei Malen von Bilddaten in einer optischen Achsenrichtung des Paares von Glasfasern voneinander verschieden sind.

8. Fusionsspleißsystem (1A), umfassend:
eine Vielzahl von Fusionsspleißern, von denen jeder der Fusionsspleißer nach einem der Ansprüche 1 bis 7 ist; und
eine Modellerzeugungsvorrichtung (20), die dazu konfiguriert ist, das Unterscheidungsmodell durch Sammeln der Probedaten von der Vielzahl von Fusionsspleißern zu erzeugen, um das maschinelle Lernen durchzuführen, und das Unterscheidungsmodell der Vielzahl von Fusionsspleißern bereitzustellen.

9. Fusionsspleißsystem nach Anspruch 8, wobei
die Modellerzeugungsvorrichtung die Vielzahl von Fusionsspleißern in zwei oder mehr Gruppen klassifiziert, von denen angenommen wird, dass sie ähnliche Tendenzen bei den Bilddaten aufweisen, um das Unterscheidungsmodell für jede Gruppe zu erzeugen, und
der zweite Unterscheidungsalgorithmus der Unterscheidungseinheit jedes der Fusionsspleißer das Unterscheidungsmodell, das einer Gruppe entspricht, zu der jeder der Fusionsspleißer gehört, von der Modellerzeugungsvorrichtung erhält.

10. Fusionsspleißsystem nach Anspruch 8 oder 9, wobei die Probedaten, die für das maschinelle Lernen der Modellerzeugungsvorrichtung verwendet werden, sowohl die Probedaten beinhalten, wenn ein Typ jeder des Paares von Glasfasern durch den ersten Unterscheidungsalgorithmus unterschieden werden darf, als auch die Probedaten, wenn ein Typ jeder des Paares von Glasfasern nicht unterschieden werden darf und wenn der Typ jeder des Paares von Glasfasern durch den ersten Unterscheidungsalgorithmus fehlerhaft unterschieden wird.

11. Fusionsspleißsystem nach Anspruch 8 oder 9, wobei
die Probedaten, die für das maschinelle Lernen der Modellerzeugungsvorrichtung verwendet werden, ausschließlich die Probedaten beinhalten, wenn ein Typ von jeder des Paares von Glasfasern durch den ersten Unterscheidungsalgorithmus unterschieden werden darf, und
die Unterscheidungseinheit jedes der Fusionsspleißer das maschinelle Lernen unter Verwendung der Probedaten davon durchführt, wenn ein Typ jeder des Paares von Glasfasern nicht unterschieden werden darf und wenn ein Typ jeder des Paares von Glasfasern durch den ersten Unterscheidungsalgorithmus fehlerhaft unterschieden wird, um das Unterscheidungsmodell zu verbessern.

12. Fusionsspleißsystem nach Anspruch 8 oder 9 wobei
die Probedaten, die für das maschinelle Lernen der Modellerzeugungsvorrichtung verwendet werden, sowohl die Probedaten beinhalten, wenn ein Typ jeder des Paares von Glasfasern durch den ersten Unterscheidungsalgorithmus unterschieden werden darf, als auch die Probedaten, wenn ein Typ jeder des Paares von Glasfasern nicht unterschieden werden darf und wenn ein Typ jeder des Paares von Glasfasern durch den ersten Unterscheidungsalgorithmus fehlerhaft unterschieden wird, und
die Unterscheidungseinheit jedes der Fusionsspleißer das maschinelle Lernen unter Verwendung der Probedaten davon und unter Ausschluss der Probedaten, die der Modellerzeugungsvorrichtung bereitgestellt werden, durchführt, wenn ein Typ jeder des Paares von Glasfasern nicht unterschieden werden darf und wenn ein Typ jeder des Paares von Glasfasern durch den ersten Unterscheidungsalgorithmus fehlerhaft unterschieden wird, um das Unterscheidungsmodell zu verbessern.

13. Verfahren zum Fusionsspleißen einer Glasfaser, wobei das Verfahren Folgendes umfasst:
Generieren von Bilddaten durch Abbilden eines Paares von Glasfasern;
Unterscheiden eines Typs jeder des Paares von Glasfasern basierend auf einer Vielzahl von Merkmalsmengen, die aus Bilddaten erhalten werden, welche beim Generieren gewonnen werden, wobei ein Unterscheidungsergebnis durch einen des ersten und zweiten Unterscheidungsalgorithmus zum Unterscheiden eines Typs einer Glasfaser angenommen wird, wobei der erste Unterscheidungsalgorithmus durch ein anderes Verfahren als maschinelles Lernen vorgegeben ist, basierend auf einer Korrelation zwischen einer Vielzahl von Merkmalsmengen, die aus Bilddaten einer Glasfaser und einem Typ einer Glasfaser erhalten werden, von der die Merkmalsmengen erhalten werden, der zweite Unterscheidungsalgorithmus ein Unterscheidungsmodell zum Unterscheiden eines Typs einer zu spleißenden Glasfaser beinhaltet, basierend auf Bilddaten der zu spleißenden Glasfaser, wobei das Unterscheidungsmodell durch maschinelles Lernen unter Verwendung von Probedaten erzeugt wird, die eine Korrespondenzbeziehung zwischen einer Vielzahl von Merkmalsmengen, die aus Bilddaten einer Glasfaser, und einem Typ einer Glasfaser erhalten werden, von der die Merkmalsmengen erhalten werden, anzeigen und
Fusionsspleißen des Paares von Glasfasern miteinander unter einer Spleißbedingung gemäß einer Kombination der Typen des Paares von Glasfasern basierend auf einem Unterscheidungsergebnis beim Unterscheiden, wobei das Verfahren eines der folgenden Merkmale (a) bis (d) beinhaltet:
(a) beim Unterscheiden wird ein Unterscheidungsergebnis durch einen des ersten und zweiten Unterscheidungsalgorithmus angenommen, wenn eine vorgegebene Merkmalsmenge, die in der Vielzahl von Merkmalsmengen enthalten ist, größer als ein Schwellenwert ist, und wird ein Unterscheidungsergebnis durch einen anderen des ersten und zweiten Unterscheidungsalgorithmus angenommen, wenn die vorgegebene Merkmalsmenge kleiner als der Schwellenwert ist;
(b) beim Unterscheiden wird, wenn ein Typ jedes Paares von Glasfasern durch den ersten Unterscheidungsalgorithmus unterschieden werden darf, ein Unterscheidungsergebnis davon angenommen, und wenn ein Typ jedes Paares von Glasfasern nicht durch den ersten Unterscheidungsalgorithmus unterschieden werden darf, wird ein Unterscheidungsergebnis durch den zweiten Unterscheidungsalgorithmus angenommen;
(c) beim Generieren wird das Paar von Glasfasern mindestens zweimal abgebildet, um mindestens zweimal Bilddaten zu erzeugen,
beim Unterscheiden wird ein Unterscheidungsergebnis angenommen, das durch einen des ersten und zweiten Unterscheidungsalgorithmus erhalten wird, wenn eine Abweichung einer vorgegebenen Merkmalsmenge zwischen mindestens zwei Merkmalsmengengruppen, die aus der Vielzahl von Merkmalsmengen bestehen, die aus mindestens zwei von der Abbildungseinheit bereitgestellten Bilddaten erhalten werden, größer als ein Schwellenwert ist, und wird ein Unterscheidungsergebnis angenommen, das durch einen anderen des ersten und zweiten Unterscheidungsalgorithmus erhalten wird, wenn eine Abweichung der vorgegebenen Merkmalsmenge kleiner als der Schwellenwert ist; und
(d) beim Generieren wird das Paar von Glasfasern mindestens zweimal abgebildet, um mindestens zweimal Bilddaten zu erzeugen,
beim Unterscheiden werden der erste und zweite Unterscheidungsalgorithmus basierend auf mindestens zwei Merkmalsmengengruppen ausgeführt, die aus der Vielzahl von Merkmalsmengen bestehen, die aus mindestens zwei von der Abbildungseinheit bereitgestellten Bilddaten erhalten werden, und
von mindestens zwei Unterscheidungsergebnissen, die durch den ersten Unterscheidungsalgorithmus erhalten werden, und mindestens zwei Unterscheidungsergebnissen, die durch den zweiten Unterscheidungsalgorithmus erhalten werden, werden mindestens zwei Unterscheidungsergebnisse mit geringerer Abweichung der Unterscheidungsergebnisse angenommen.

## Revendications

1. Dispositif d'épissurage par fusion (10) comprenant :
une unité d'imagerie (12) configurée pour effectuer l'imagerie d'une paire de fibres optiques (F1, F2) pour générer des données d'imagerie (PX, PY) ;
une unité de discrimination (14) configurée pour discriminer un type de chacune des fibres optiques de la paire sur la base d'une pluralité de quantités de caractéristiques obtenues à partir de données d'imagerie fournies par l'unité d'imagerie, l'unité de discrimination ayant des premier (14a) et deuxième (14b) algorithmes de discrimination pour discriminer un type de fibre optique et adopter un résultat de discrimination par l'un quelconque des premier et deuxième algorithmes de discrimination, le premier algorithme de discrimination étant prédéterminé par un procédé autre que l'apprentissage machine, basé sur une corrélation entre une pluralité de quantités de caractéristiques obtenues à partir de données d'imagerie d'une fibre optique et un type de fibre optique à partir de laquelle les quantités de caractéristiques sont obtenues, le deuxième algorithme de discrimination comportant un modèle de discrimination (Md) pour discriminer un type de fibre optique à épisser sur la base de données d'imagerie de la fibre optique à épisser, le modèle de discrimination étant créé par apprentissage machine à l'aide de données d'échantillon (Da) indiquant une relation de correspondance entre une pluralité de quantités de caractéristiques obtenues à partir de données d'imagerie d'une fibre optique et un type de fibre optique à partir de laquelle les quantités de caractéristiques sont obtenues ; et
une unité d'épissurage (3) configurée pour épisser par fusion la paire de fibres optiques l'une à l'autre dans une condition d'épissurage selon une combinaison des types de paire de fibres optiques sur la base d'un résultat de discrimination dans l'unité de discrimination,
dans lequel le dispositif d'épissurage par fusion comporte l'une quelconque des configurations (a) à (d) suivantes :
(a) l'unité de discrimination adopte un résultat de discrimination par un des premier et deuxième algorithmes de discrimination lorsqu'une quantité de caractéristiques prédéterminée incluse dans la pluralité de quantités de caractéristiques est supérieure à une valeur seuil, et adopte un résultat de discrimination par un autre des premier et deuxième algorithmes de discrimination lorsque la quantité de caractéristiques prédéterminée est inférieure à la valeur seuil ;
(b) lorsqu'un type de chacune des fibres optiques de la paire peut être discriminé par le premier algorithme de discrimination, l'unité de discrimination adopte un résultat de discrimination de celui-ci, et lorsqu'un type de chacune des fibres optiques de la paire ne peut pas être discriminé par le premier algorithme de discrimination, l'unité de discrimination adopte un résultat de discrimination par le deuxième algorithme de discrimination ;
(c) l'unité d'imagerie effectue au moins deux fois l'imagerie de la paire de fibres optiques pour générer au moins deux fois des données d'imagerie,
l'unité de discrimination adopte un résultat de discrimination obtenu par un des premier et deuxième algorithmes de discrimination lorsqu'une variation d'une quantité de caractéristiques prédéterminée entre au moins deux groupes de quantités de caractéristiques constitués de la pluralité de quantités de caractéristiques obtenues à partir d'au moins deux données d'imagerie fournies par l'unité d'imagerie est supérieure à une valeur seuil, et adopte un résultat de discrimination obtenu par l'un quelconque des premier et deuxième algorithmes de discrimination lorsqu'une variation de la quantité de caractéristiques prédéterminée est inférieure à la valeur seuil ; et
(d) l'unité d'imagerie effectue au moins deux fois l'imagerie de la paire de fibres optiques pour générer au moins deux fois des données d'imagerie,
l'unité de discrimination exécute les premier et deuxième algorithmes de discrimination sur la base d'au moins deux groupes de quantités de caractéristiques constitués de la pluralité de quantités de caractéristiques obtenues à partir d'au moins deux données d'imagerie fournies par l'unité d'imagerie, et
parmi au moins deux résultats de discrimination obtenus par le premier algorithme de discrimination et au moins deux résultats de discrimination obtenus par le deuxième algorithme de discrimination, l'unité de discrimination adopte au moins deux résultats de discrimination avec une variation plus faible des résultats de discrimination.

2. Dispositif d'épissurage par fusion selon la revendication 1, dans lequel l'apprentissage machine est un apprentissage profond.

3. Dispositif d'épissurage par fusion selon la revendication 1 ou 2, dans lequel, dans la configuration (a), la valeur seuil est une valeur déterminée sur la base d'une comparaison entre une précision de discrimination par le premier algorithme de discrimination et une précision de discrimination par le deuxième algorithme de discrimination lorsque la quantité de caractéristiques prédéterminée change.

4. Dispositif d'épissurage par fusion selon la revendication 1 ou 2, dans lequel, dans la configuration (b), l'unité de discrimination exécute d'abord le premier algorithme de discrimination, puis exécute le deuxième algorithme de discrimination lorsque le type de chacune des fibres optiques de la paire ne peut pas être discriminé par le premier algorithme de discrimination.

5. Dispositif d'épissurage par fusion selon la revendication 1 ou 2, dans lequel, dans la configuration (b), l'unité de discrimination exécute le premier algorithme de discrimination et le deuxième algorithme de discrimination en parallèle.

6. Dispositif d'épissurage par fusion selon la revendication 1 ou 2, dans lequel, dans la configuration (c) ou (d), des positions d'imagerie effectuée au moins deux fois de données d'imagerie dans une direction d'axe optique de la paire de fibres optiques sont identiques l'une à l'autre.

7. Dispositif d'épissurage par fusion selon la revendication 1 ou 2, dans lequel, dans la configuration (c) ou (d), des positions d'imagerie effectuée au moins deux fois de données d'imagerie dans une direction d'axe optique de la paire de fibres optiques sont différentes les unes des autres.

8. Système d'épissurage par fusion (1A) comprenant :
une pluralité de dispositifs d'épissurage par fusion dont chacun est le dispositif d'épissurage par fusion selon l'une des revendications 1 à 7 ; et
un dispositif de création de modèle (20) configuré pour créer le modèle de discrimination en collectant les données d'échantillon à partir de la pluralité de dispositifs d'épissurage par fusion pour effectuer l'apprentissage machine et fournir le modèle de discrimination à la pluralité de dispositifs d'épissurage par fusion.

9. Système d'épissurage par fusion selon la revendication 8, dans lequel
le dispositif de création de modèle classe la pluralité de dispositifs d'épissurage par fusion en deux groupes présumés ou plus pour avoir des tendances similaires de données d'imagerie pour créer le modèle de discrimination pour chaque groupe, et
le deuxième algorithme de discrimination de l'unité de discrimination de chacun des dispositifs d'épissurage par fusion obtient le modèle de discrimination correspondant à un groupe auquel appartient chacun des dispositifs d'épissurage par fusion à partir du dispositif de création de modèle.

10. Système d'épissurage par fusion selon la revendication 8 ou 9, dans lequel les données d'échantillon utilisées pour l'apprentissage machine du dispositif de création de modèle comportent à la fois les données d'échantillon lorsqu'un type de chacune des fibres optiques de la paire peut être discriminé par le premier algorithme de discrimination, et les données d'échantillon lorsqu'un type de chacune des fibres optiques de la paire ne peut pas être discriminé, et lorsque le type de chacune des fibres optiques de la paire est discriminé de manière erronée par le premier algorithme de discrimination.

11. Système d'épissurage par fusion selon la revendication 8 ou 9, dans lequel
les données d'échantillon utilisées pour l'apprentissage machine du dispositif de création de modèle comportent exclusivement les données d'échantillon lorsqu'un type de chacune des fibres optiques de la paire peut être discriminé par le premier algorithme de discrimination, et
l'unité de discrimination de chacun des dispositifs d'épissurage par fusion effectue l'apprentissage machine à l'aide des données d'échantillon de celui-ci lorsqu'un type de chacune des fibres optiques de la paire ne peut pas être discriminé et lorsqu'un type de chacune des fibres optiques de la paire est discriminé de manière erronée par le premier algorithme de discrimination pour améliorer le modèle de discrimination.

12. Système d'épissurage par fusion selon la revendication 8 ou 9, dans lequel
les données d'échantillon utilisées pour l'apprentissage machine du dispositif de création de modèle comportent à la fois les données d'échantillon lorsqu'un type de chacune des fibres optiques de la paire peut être discriminé par le premier algorithme de discrimination, et les données d'échantillon lorsqu'un type de chacune des fibres optiques de la paire ne peut pas être discriminé, et lorsqu'un type de chacune des fibres optiques de la paire est discriminé de manière erronée par le premier algorithme de discrimination, et
l'unité de discrimination de chacun des dispositifs d'épissurage par fusion effectue l'apprentissage machine à l'aide des données d'échantillon de celui-ci et l'exclusion des données d'échantillon fournies au dispositif de création de modèle lorsqu'un type de chacune des fibres optiques de la paire ne peut pas être discriminé et lorsqu'un type de chacune des fibres optiques de la paire est discriminé de manière erronée par le premier algorithme de discrimination pour améliorer le modèle de discrimination.

13. Procédé d'épissurage par fusion d'une fibre optique, le procédé comprenant les étapes suivantes :
générer des données d'imagerie en effectuant l'imagerie d'une paire de fibres optiques ;
discriminer un type de chacune des fibres optiques de la paire sur la base d'une pluralité de quantités de caractéristiques obtenues à partir de données d'imagerie acquises lors de la génération, un résultat de discrimination par l'un quelconque des premier et deuxième algorithmes de discrimination pour discriminer un type de fibre optique étant adopté, le premier algorithme de discrimination étant prédéterminé par un procédé autre que l'apprentissage machine, basé sur une corrélation entre une pluralité de quantités de caractéristiques obtenues à partir de données d'imagerie d'une fibre optique et un type de fibre optique à partir de laquelle les quantités de caractéristiques sont obtenues, le deuxième algorithme de discrimination comportant un modèle de discrimination pour discriminer un type de fibre optique à épisser sur la base de données d'imagerie de la fibre optique à épisser, le modèle de discrimination étant créé par apprentissage machine à l'aide de données d'échantillon indiquant une relation de correspondance entre une pluralité de quantités de caractéristiques obtenues à partir de données d'imagerie d'une fibre optique et un type de fibre optique à partir de laquelle les quantités de caractéristiques sont obtenues ; et
épisser par fusion la paire de fibres optiques l'une à l'autre dans une condition d'épissurage selon une combinaison des types de paire de fibres optiques sur la base d'un résultat de discrimination lors de la discrimination,
dans lequel le procédé comporte l'une quelconque des caractéristiques (a) à (d) suivantes :
(a) lors de la discrimination, un résultat de discrimination par un des premier et deuxième algorithmes de discrimination est adopté lorsqu'une quantité de caractéristiques prédéterminée incluse dans la pluralité de quantités de caractéristiques est supérieure à une valeur seuil, et un résultat de discrimination par un autre des premier et deuxième algorithmes de discrimination est adopté lorsque la quantité de caractéristiques prédéterminée est inférieure à la valeur seuil ;
(b) lors de la discrimination, lorsqu'un type de chacune des fibres optiques de la paire peut être discriminé par le premier algorithme de discrimination, un résultat de discrimination de celui-ci est adopté, et lorsqu'un type de chacune des fibres optiques de la paire ne peut pas être discriminé par le premier algorithme de discrimination, un résultat de discrimination par le deuxième algorithme de discrimination est adopté ;
(c) lors de la génération, les fibres optiques de la paire sont soumises à l'imagerie au moins deux fois pour générer au moins deux fois des données d'imagerie,
lors de la discrimination, un résultat de discrimination obtenu par un des premier et deuxième algorithmes de discrimination est adopté lorsqu'une variation d'une quantité de caractéristiques prédéterminée entre au moins deux groupes de quantités de caractéristiques constitués de la pluralité de quantités de caractéristiques obtenues à partir d'au moins deux données d'imagerie fournies par l'unité d'imagerie est supérieure à une valeur seuil, et un résultat de discrimination obtenu par l'un quelconque des premier et deuxième algorithmes de discrimination est adopté lorsqu'une variation de la quantité de caractéristiques prédéterminée est inférieure à la valeur seuil ; et
(d) lors de la génération, les fibres optiques de la paire sont soumises à l'imagerie au moins deux fois pour générer au moins deux fois des données d'imagerie,
lors de la discrimination, les premier et deuxième algorithmes de discrimination sont exécutés sur la base d'au moins deux groupes de quantités de caractéristiques constitués de la pluralité de quantités de caractéristiques obtenues à partir d'au moins deux données d'imagerie fournies par l'unité d'imagerie, et
parmi au moins deux résultats de discrimination obtenus par le premier algorithme de discrimination et au moins deux résultats de discrimination obtenus par le deuxième algorithme de discrimination, au moins deux résultats de discrimination avec une variation plus faible des résultats de discrimination sont adoptés.
